# EUROPÄISCHE PATENTANMELDUNG

(11) **EP 4 292 838 A1**
(43) Veröffentlichungstag der Anmeldung: **20.12.2023**
(21) Anmeldenummer: 23177709.5
(22) Anmeldetag: 06.06.2023
(51) Int. Cl.: B60D 1/06, B60D 1/54, B60D 1/62

(54) **ANHÄNGEKUPPLUNG**

(30) Priorität: 14.06.2022 DE 102022114954
(71) Anmelder: ACPS Automotive GmbH, 74379 Ingersheim (DE)
(72) Erfinder: Gentner, Wolfgang, 71711 Steinheim (DE)
(74) Vertreter: Hoeger, Stellrecht & Partner Patentanwälte mbB

(57) **Zusammenfassung**

Um bei einer Anhängekupplung die Ruhestellung und/oder die Arbeitsstellung durch ein eindeutiges Signal zu erfassen, wird vorgeschlagen, dass der Ruhestellungsrasteinrichtung eine Detektoreinheit zugeordnet ist, welche mindestens eine aktive Stellung der Ruhestellungsrasteinrichtung erfasst.

## Beschreibung

Die Erfindung betrifft eine Anhängekupplung, umfassend einen zwischen einer Arbeitsstellung und einer Ruhestellung bewegbaren Kugelhals mit einem an einem ersten Ende angeordneten Schwenklagerkörper und einer an einem zweiten Ende angeordneten Kupplungskugel, eine fahrzeugfest angeordnete Schwenklagereinheit, mittels welcher der Schwenklagerkörper um eine Schwenkachse zwischen der Arbeitsstellung und der Ruhestellung verschwenkbar aufgenommen ist, eine Drehblockiereinrichtung, welche in der Arbeitsstellung in einer Drehblockierstellung eine Schwenkbewegung des Schwenklagerkörpers um die Schwenkachse blockiert, und in einer Lösestellung die Schwenkbewegung des Schwenklagerkörpers freigibt, sowie eine Ruhestellungsrasteinrichtung, welche in einer inaktiven Stellung eine Bewegung des Schwenklagerkörpers relativ zur Schwenklagereinheit zulässt und in einer Raststellung den Schwenklagerkörper relativ zu der Schwenklagereinheit drehfest festlegt.

Derartige Anhängekupplungen sind aus der EP 3 815 936 A1 bekannt.

Bei derartigen Anhängekupplungen besteht jedoch das Problem, die Ruhestellung und/oder die Arbeitsstellung durch ein eindeutiges Signal zu erfassen.

Diese Aufgabe wird bei einer Anhängekupplung der eingangs beschrieben Art erfindungsgemäß dadurch gelöst, dass der Ruhestellungsrasteinrichtung eine Detektoreinheit zugeordnet ist, welche mindestens eine aktive Stellung der Ruhestellungsrasteinrichtung erfasst.

Mit einer derartigen Detektoreinheit besteht somit die Möglichkeit, durch Erfassen der mindestens einen aktiven Stellung der Ruhestellungsrasteinrichtung ein Signal zu erzeugen, welches eindeutig angibt, dass der Schwenklagerkörper in der Ruhestellung durch die Ruhestellungsrasteinrichtung zuverlässig verrastet und somit gesichert ist.

Weiterhin ist es vorteilhaft, wenn die Detektoreinheit auch eine inaktive Stellung der Ruhestellungsrasteinrichtung erfasst.

Da die Ruhestellungsrasteinrichtung lediglich zwei Stellungen, nämlich eine aktive und eine inaktive Stellung aufweisen soll, eröffnet die Erfassung der aktiven und der inaktiven Stellung die Möglichkeit, festzustellen, ob an der Ruhestellungsrasteinrichtung ein Defekt vorliegt und/oder die Detektoreinheit die Stellungen der Ruhestellungsrasteinrichtung stets zuverlässig erfasst.

Grundsätzlich wäre es denkbar, die mindestens eine Stellung der Ruhestellungsrasteinrichtung durch beispielsweise einen Tastschalter zu erfassen.

Ein derartiger Tastschalter hat jedoch das Problem, dass dieser in den Aufbau der Ruhestellungsrasteinrichtung integriert werden muss.

Aus diesem Grund sieht eine weitere vorteilhafte Lösung vor, dass die Detektoreinheit die mindestens eine Stellung der Ruhestellungsrasteinrichtung berührungslos erfasst.

Eine derartige berührungslose Erfassung der mindestens einen Stellung der Ruhestellungsrasteinrichtung könnte beispielsweise auf kapazitivem Wege oder auch auf optischem Wege erfolgen.

Eine robust arbeitende und störungsfreie Erfassung ist jedoch insbesondere dann gegeben, wenn die Detektoreinheit die mindestens eine Stellung der Ruhestellungsrasteinrichtung durch ein durch die mindestens eine Stellung der Ruhestellungsrasteinrichtung beeinflusstes Magnetfeld erfasst.

Dies lässt sich insbesondere dann erreichen, wenn die Detektoreinheit einen Magnetfeldsensor aufweist.

Ein derartiger Magnetfeldsensor ist beispielsweise ein Hallsensor.

Es wäre aber auch denkbar, magnetisch betätigbare Kontakte, wie beispielsweise Reedkontakte oder andere Sensoren auf magnetischer Basis, vorzusehen.

Hinsichtlich der Beeinflussung des Magnetfeldes seitens der Ruhestellungsrasteinrichtung sind die unterschiedlichsten Lösungsmöglichkeiten denkbar.

Eine Möglichkeit sieht vor, dass der Magnetfeldsensor ein Magnetfeld eines durch die Bewegung der Ruhestellungsrasteinrichtung bewegbaren Magneten erfasst.

In diesem Fall wird der Magnet durch eine Komponente der Ruhestellungsrasteinrichtung relativ zum Magnetfeldsensor bewegt, so dass daher der Magnetfeldsensor das durch die Bewegung variierende Magnetfeld erkennen kann.

Eine andere vorteilhafte Lösung sieht jedoch vor, dass der Magnetfeldsensor ein Magnetfeld eines diesem stationär zugeordneten und durch die Stellungen der Ruhestellungsrasteinrichtung beeinflussten Magneten erfasst.

Das heißt, dass der Magnet selbst nicht bewegt wird, sondern dessen Magnetfeld durch die Komponenten der Ruhestellungsrasteinrichtung, insbesondere magnetisierbare Komponenten der Ruhestellungsrasteinrichtung, verändert wird.

Besonders vorteilhaft ist es, um die Detektoreinheit einfach montieren und geschützt betreiben zu können, wenn die Detektoreinheit mindestens die aktive Stellung der Ruhestellungsrasteinrichtung durch eine die Ruhestellungsrasteinrichtung übergreifende Abdeckung der Schwenklagereinheit hindurch erfasst, so dass dadurch durch die Abdeckung der Schwenklagereinheit ein Schutz einerseits der Ruhestellungsrasteinrichtung vor äußeren Einflüssen und andererseits einen Schutz der Detektoreinheit von äußeren Einflüssen einfach realisierbar ist.

Im einfachsten Fall ist dabei die Abdeckung an dem Schwenklagerkörper angeordnet und mit dem Schwenklagerkörper verschwenkbar, so dass die Detektoreinheit mit dem Schwenklagerkörper mitbewegbar ist.

Besonders vorteilhaft ist es, wenn die Ruhestellungsrasteinrichtung von der Drehblockiereinrichtung unabhängig ist und somit eigenständig arbeitet.

Des weiteren ist vorzugsweise vorgesehen, dass die Ruhestellungsrasteinrichtung bei Erreichen der der Ruhestellung entsprechenden Schwenkstellung des Schwenklagerkörpers aufgrund eines in dieser vorgesehenen Federelemente selbständig in die aktive Stellung, das heißt die verrastende Stellung übergeht.

Des weiteren ist vorzugsweise vorgesehen, dass die Ruhestellungsrasteinrichtung dann, wenn sie nicht in der aktiven Stellung steht, stets in einer Rastbereitschaftstellung steht, das heißt einer Stellung, in der sie jederzeit die Möglichkeit hat, in die aktive Stellung oder Raststellung überzugehen.

Hinsichtlich des Übergangs der Ruhestellungsrasteinrichtung von der aktiven Stellung in die inaktive Stellung und des Auslösens dieses Übergangs wurden bislang keine näheren Angaben gemacht.

So wäre es beispielsweise denkbar, den Übergang der Ruhestellungsrasteinrichtung von der aktiven Stellung in die inaktive Stellung durch eine Drehbewegung des Schwenklagerkörpers auszulösen.

Besonders vorteilhaft ist es jedoch, wenn eine Deaktivierungseinheit vorgesehen ist, mit welcher die Ruhestellungsrasteinrichtung unabhängig von der Schwenkbewegung des Schwenklagerkörpers von der aktiven Stellung in die inaktive Stellung überführbar ist.

Um den Übergang der Ruhestellungsrasteinrichtung von der aktiven Stellung in die inaktive Stellung mit der Funktion der Anhängekupplung zu koordinieren, ist vorzugsweise vorgesehen, dass die Ruhestellungsrasteinrichtung mittels der Deaktivierungseinheit in Abhängigkeit von einem bestimmten Funktionszustand der Anhängekupplung von der aktiven Stellung in die inaktive Stellung überführbar ist.

Dies lässt sich insbesondere dadurch vorteilhaft mit der Funktion der Anhängekupplung koordinieren, wenn die Ruhestellungsrasteinrichtung mittels der Deaktivierungseinheit vor einem Verschwenken des Schwenklagerkörpers von der Ruhestellung in die Arbeitsstellung von der aktiven Stellung in die inaktive Stellung überführbar ist.

Insbesondere ist hierzu vorgesehen, dass die Ruhestellungsrasteinrichtung mittels der Deaktivierungseinheit durch eine mit der Deaktivierungseinheit zusammenwirkende Antriebseinheit von der aktiven Stellung in die inaktive Stellung überführbar ist.

Hinsichtlich der Ausbildung der Ruhestellungsrasteinrichtung selbst wurden bislang keine näheren Angaben gemacht.

So ist beispielsweise vorgesehen, dass die Ruhestellungsrasteinrichtung einen von einer aktiven Stellung in eine inaktive Stellung bewegbaren Rastkörper umfasst, wobei der Rastkörper in der aktiven Stellung die Verrastung in der Ruhestellung bewirkt und in der inaktiven Stellung keine Verrastung bewirkt.

Besonders günstig ist es, wenn der Rastkörper an dem Schwenklagerkörper oder der Schwenklagereinheit angeordnet, in einer Rastrichtung bewegbar ist, und mit einer in der Schwenklagereinheit oder dem Schwenklagerkörper angeordneten Rastaufnahme in der aktiven Stellung in Eingriff bringbar ist.

Dabei ist es besonders günstig, wenn der in der Rastrichtung bewegbare Rastkörper im Schwenklagerkörper angeordnet ist und somit mit dem Schwenklagerkörper mitbewegbar ist, und wenn die Rastaufnahme an der Schwenklagereinheit angeordnet ist.

Hinsichtlich des Verlaufs der Rastrichtung sind die unterschiedlichsten Möglichkeiten denkbar.

So sieht eine vorteilhafte Lösung vor, dass die Rastrichtung parallel zur Schwenkachse verläuft.

Im Fall eines Rastkörpers und einer mit diesem zusammenwirkenden Rastaufnahme ist vorzugsweise vorgesehen, dass der Rastaufnahme ein Betätigungskörper der Deaktivierungseinheit zugeordnet ist, der bei wirksamer Deaktivierungseinheit den Rastkörper aus der Rastaufnahme verdrängt und somit in einfacher Weise den Rastkörper von der aktiven Stellung in die inaktive Stellung überführt.

Im Zusammenhang mit der Erfassung der aktiven und inaktiven Stellung der Ruhestellungsrasteinrichtung durch die Detektoreinheit wurde nicht näher erläutert, welche Signale diesbezüglich erzeugt werden.

So sieht eine vorteilhafte Lösung vor, dass die Anhängekupplung eine Zustandsauswerteeinheit aufweist, welche mindestens ein Signal der Detektoreinheit auswertet und ein eine gesicherte Ruhestellung anzeigendes Signal erzeugt.

Da es bei der erfindungsgemäßen Anhängekupplung wichtig ist, die Arbeitsstellung sicher aufrecht zu erhalten, ist vorzugsweise vorgesehen, dass die Anhängekupplung eine Sicherungseinrichtung aufweist, welche die Drehblockiereinrichtung in der Drehblockierstellung gegen einen Übergang in die Lösestellung sichert.

In diesem Fall ist ebenfalls vorgesehen, dass der Sicherungseinrichtung ein Detektor zugeordnet ist, welcher eine sichernde oder entsichernde Stellung eines die Drehblockierstellung sichernden Sicherungsstifts erfasst und somit die Möglichkeit schafft, zu erkennen, ob eine Sicherung der Drehblockierstellung vorliegt oder nicht.

Dabei ist insbesondere vorgesehen, dass der Sicherungsstift durch ein Federelement in Richtung seiner die Drehblockierstellung sichernden Stellung beaufschlagt ist.

Ferner ist in diesem Fall zweckmäßigerweise vorgesehen, dass der Detektor der Sicherungseinrichtung mit der Zustandsauswerteeinheit zusammenwirkt und dass die Zustandsauswerteeinheit eine eine gesicherte Drehblockierstellung der Drehblockiereinrichtung anzeigendes Signal erzeugt.

Besonders vorteilhaft ist es, wenn die Zustandsauswerteeinheit nur dann das eine gesicherte Ruhestellung anzeigende Signal erzeugt, wenn die Detektoreinheit die aktive Stellung der Ruhestellungsrasteinrichtung und außerdem der Detektor die entsichernde Stellung der Sicherungseinrichtung meldet.

Ferner ist ebenfalls vorzugsweise vorgesehen, dass die Zustandsauswerteeinheit nur dann das eine gesicherte Arbeitsstellung anzeigende Signal erzeugt, wenn der Detektor die sichernde Stellung der Sicherungseinrichtung und die Detektoreinheit die inaktive Stellung der Ruhestellungsrasteinrichtung meldet.

Damit besteht die Möglichkeit, eindeutig die gesicherte Ruhestellung oder die gesicherte Arbeitsstellung zu erkennen und gleichzeitig sicherzustellen, dass keine Fehlfunktion weder der Detektoreinheit noch des Detektors vorliegt.

Hinsichtlich der Ausbildung der Drehblockiereinrichtung wurden im Zusammenhang mit der bisherigen Erläuterung der erfindungsgemäßen Lösung keine näheren Angaben gemacht.

So sieht eine vorteilhafte Lösung vor, dass die Drehblockiereinrichtung mindestens zwei Drehblockierkörper aufweist, die mittels eines Führungskörpers in einer Führungsrichtung bewegbar geführt sind, wobei die Drehblockierkörper in der Arbeitsstellung durch Bewegung in der Führungsrichtung in eine Drehblockierstellung bringbar sind und in dieser mit jeweils einer Aufnahme im Schwenklagerkörper in Eingriff stehen, um eine Schwenkbewegung des Schwenklagerkörpers um die Schwenkachse relativ zum Führungskörper zu blockieren und in eine Lösestellung bringbar sind und in dieser mit der jeweiligen Aufnahme außer Eingriff stehen und dass die Drehblockiereinrichtung einen für jeden der Drehblockierkörper jeweils eine quer zur Führungsrichtung verlaufende Druckfläche aufweisenden Betätigungskörper umfasst, durch dessen Bewegung in einer Betätigungsrichtung die mindestens zwei Drehblockierkörper in der Führungsrichtung bewegbar und beaufschlagbar sind.

Insbesondere besteht bei der erfindungsgemäßen Ruhestellungsrasteinrichtung mit einer voranstehend beschriebenen Deaktivierungseinheit die Möglichkeit, dass ein mittels eines Antriebselements antreibbares Verzweigungsgetriebe vorgesehen ist, welches ein erstes Abtriebselement aufweist, mittels welchem ein Antreiben der Schwenkbewegung des Schwenklagerkörpers mit dem Kugelhals erfolgt, und ein zweites Abtriebselement aufweist, welches mit der Deaktivierungseinheit zur Deaktivierung der Ruhestellungsrasteinrichtung zusammenwirkt.

Das heißt, dass der Antrieb für die Deaktivierungseinheit von einem Verzweigungsgetriebe abgeleitet werden kann, welches einerseits ein Antreiben der Schwenkbewegung des Schwenklagerkörpers bewirkt und andererseits zum Antreiben der Deaktivierungseinheit dient.

Das Verzweigungsgetriebe kann dabei in unterschiedlicher Art und Weise ausgebildet sein.

So sieht eine vorteilhafte Lösung vor, dass das Verzweigungsgetriebe das Antriebselement selbsttätig mit dem ersten Abtriebselement oder dem zweiten Abtriebselement koppelt.

Ferner kann das Verzweigungsgetriebe in unterschiedlichster Art und Weise ausgebildet sein.

Eine einfache und vorteilhafte Lösung sieht vor, dass das Verzweigungsgetriebe ein Umlaufgetriebe, insbesondere ein Planetengetriebe, ist.

Ferner ist zweckmäßigerweise vorgesehen, dass das Antriebselement des Verzweigungsgetriebes mittels der, insbesondere elektrisch betriebenen, Antriebseinheit angetrieben ist.

Hinsichtlich der Ausbildung der Drehblockiereinrichtung wurden im Zusammenhang mit der bisherigen Erläuterung der erfindungsgemäßen Lösung keine näheren Angaben gemacht.

So sieht eine vorteilhafte Lösung vor, dass die Drehblockierkörper um den Betätigungskörper herum angeordnet sind.

Vorzugsweise sind dabei beispielsweise nicht nur zwei, sondern drei Drehblockierkörper vorgesehen.

Grundsätzlich können dabei die Drehblockierkörper relativ zum Betätigungskörper in beliebiger Weise angeordnet sein.

Ein Ausführungsbeispiel sieht dabei vor, dass die Drehblockierkörper um den Betätigungskörper herum angeordnet sind. Mit einer derartigen Lösung ist einerseits eine raumsparende Anordnung der Drehblockierkörper möglich und andererseits eine zumindest teilweise Kompensation der auf den Betätigungskörper wirkenden Reaktionskräfte.

Besonders günstig ist eine derartige Anordnung dann, wenn die Drehblockierkörper im Wesentlichen symmetrisch zu einer senkrecht zur Schwenkachse verlaufenden Ebene angeordnet sind.

Besonders günstig ist es für eine Beaufschlagung der Drehblockierkörper, wenn der Betätigungskörper sich quer zu Führungsrichtung erstreckende Keilflächen aufweist.

Vorzugsweise ist vorgesehen, dass der Betätigungskörper um die Schwenkachse drehbar angeordnet ist und sich insbesondere über einen Winkelbereich um die Schwenkachse erstreckende und parallel zur Führungsrichtung variierende Keilflächen aufweist.

Damit lassen sich die Drehblockierkörper in einfacher Weise in die Drehblockierstellung bewegen.

Insbesondere ist die Funktionalität der Drehblockierkörper dann optimal, wenn die Führungsrichtung mit mindestens einer Komponente in radialer Richtung zur Schwenkachse verläuft.

Besonders günstig ist es, wenn die Führungsrichtung näherungsweise in radialer Richtung zur Schwenkachse verläuft.

Dabei kann ein näherungsweiser Verlauf in radialer Richtung zur Schwenkachse von der radialen Richtung um bis zu 30° abweichen.

Darüber hinaus wurden im Zusammenhang mit der bisherigen Beschreibung der erfindungsgemäßen Lösung keine Angaben darüber gemacht, wie die Drehblockierkörper ihrerseits in der Führungsrichtung geführt sein sollen.

Beispielsweise wäre es denkbar, den Drehblockierkörper durch eine Führungsaufnahme in dem Schwenklagerkörper zu führen und stationäre Aufnahmen vorzusehen, mit denen der mindestens eine Drehblockierkörper in Eingriff oder außer Eingriff bringbar ist.

Ferner ist vorzugsweise vorgesehen, dass der Drehblockierkörper durch den sich in radialer Richtung an den Schwenklagerkörper anschließenden Führungskörper geführt ist, so dass auch dadurch eine kompakte Bauweise der Drehblockiereinrichtung möglich ist.

Insbesondere ist dabei der Führungskörper so ausgebildet, dass er eine Führungshülse mit der Führungsaufnahme für den jeweiligen Drehblockierkörper aufweist.

Hinsichtlich der Führung des Betätigungskörpers in der Schwenklagereinheit wurden ebenfalls bislang keine näheren Angaben gemacht.

So sieht eine besonders günstige Lösung vor, dass der Führungskörper den Betätigungskörper bewegbar, insbesondere drehbar, führt.

Ferner ist es für einen kompakten und mechanisch einfachen Aufbau der Schwenklagereinheit günstig, wenn der Führungskörper ein Schwenklager für den Schwenklagerkörper trägt oder selbst ein Schwenklager bildet.

Ferner ist zweckmäßigerweise vorgesehen, dass der Führungskörper Teil der fahrzeugfest angeordneten Schwenklagereinheit ist.

Im Rahmen der erfindungsgemäßen Lösung sind unterschiedliche Möglichkeiten der relativen Anordnung von Führungskörper, Schwenklagerkörper und Betätigungskörper denkbar.

So wäre eine Lösung denkbar, bei welcher der Betätigungskörper den Führungskörper umschließt und der Schwenklagerkörper vom Führungskörper umschlossen ist, das heißt in den Führungskörper hineingreift.

Eine besonders kompakte Lösung sieht vor, dass der Betätigungskörper von dem Führungskörper umschlossen ist und dass insbesondere der Schwenklagerkörper den Führungskörper umgreift, so dass dadurch eine kompakte Einheit gebildet ist, die sich insbesondere raumsparend aufbauen lässt.

Zweckmäßigerweise ist vorgesehen, dass der Schwenklagerkörper einen die Schwenklagereinheit außenliegend umschließenden Außenkörper bildet, der gegenüber der Schwenklagereinheit in Richtung der Schwenkachse unverschiebbar angeordnet ist und dass insbesondere das erste Ende des Kugelhalses an dem Außenkörper angesetzt ist.

Eine derartige Anordnung des Schwenklagerkörpers hat einerseits den Vorteil eines günstigen räumlichen Aufbaus der Schwenklagereinheit selbst und den Vorteil einer relativ einfachen Abdichtung der Schwenklagereinheit, da der Schwenklagerkörper keine Bewegungen in axialer Richtung der Schwenkachse durchführt.

Vorzugsweise ist zwischen einem Gehäuse der Schwenklagereinheit und einer Endseite des Außenkörpers eine um die Schwenkachse umlaufende Dichtung vorgesehen, mit welcher eine Abdichtung gegen eindringenden Schmutz und Feuchtigkeit erfolgt.

Bei einer derartigen Lösung stellt der Schwenklagerkörper gleichzeitig den die Schwenklagereinheit schützenden und umschließenden Außenkörper dar und dadurch, dass der Außenkörper gegenüber der Schwenklagereinheit in Richtung der Schwenkachse unverschiebbar angeordnet ist, wird insbesondere erreicht, dass eine einfache Abdichtung zwischen dem Außenkörper und der Schwenklagereinheit realisierbar ist.

Konstruktiv besonders günstig ist eine Lösung, bei welcher der Schwenklagerkörper einen einen Teilbereich der Drehblockiereinrichtung außenliegend umschließenden Außenkörper bildet, der gegenüber dem Führungskörper in Richtung der Schwenkachse unverschiebbar angeordnet ist.

Insbesondere ist vorgesehen, dass die Drehblockierkörper durch den Betätigungskörper von einer Lösestellung in eine Drehblockierstellung bewegbar sind.

Vorzugsweise ist dabei der Betätigungskörper so ausgebildet, dass er in der Lösestellung die Lösestellung der Drehblockierkörper zulässt.

Insbesondere sieht eine weitere Ausbildung des Betätigungskörpers vor, dass dieser in der Drehblockierstellung die Drehblockierkörper in ihrer Drehblockierstellung hält.

Um sicherzustellen, dass die Drehblockierkörper stets in ihre Drehblockierstellung übergehen, insbesondere dann, wenn keine aktive Betätigung des Betätigungskörpers erfolgt, ist vorzugsweise vorgesehen, dass der Betätigungskörper durch einen elastischen Kraftspeicher in Richtung seiner Drehblockierstellung beaufschlagt ist.

Um den Betätigungskörper nun von der Drehblockierstellung in die Lösestellung bewegen zu können, ist vorzugsweise vorgesehen, dass der Betätigungskörper durch eine Betätigungseinrichtung von der Drehblockierstellung in die Lösestellung bewegbar ist.

Insbesondere erfolgt ein derartiges Bewegen des Betätigungskörpers durch die Betätigungseinrichtung entgegen der Beaufschlagung durch den Kraftspeicher, das heißt, dass die Betätigungseinrichtung der Beaufschlagung durch den Kraftspeicher entgegenwirkt und somit die vom Kraftspeicher aufgebrachten Kräfte überwinden muss.

Insbesondere bei einem drehbaren Betätigungskörper ist vorzugsweise vorgesehen, dass mit der Betätigungseinrichtung der Betätigungskörper entgegengesetzt zur durch den Kraftspeicher bewirkten Drehrichtung verdreht wird.

Ein derartiger elastischer Kraftspeicher kann grundsätzlich an mehreren Orten angeordnet sein.

Konstruktiv ist es besonders günstig, wenn der elastische Kraftspeicher innerhalb der Schwenklagereinheit angeordnet ist.

Eine weitere konstruktiv günstige Lösung sieht vor, dass der elastische Kraftspeicher auf einer Seite des Betätigungskörpers angeordnet ist.

In diesem Fall lässt sich der elastische Kraftspeicher vorteilhaft mit dem Betätigungselement koppeln.

Hinsichtlich der Einwirkung auf den Betätigungskörper sind die unterschiedlichsten Lösungen denkbar.

So sieht eine vorteilhafte Lösung vor, dass die Betätigungseinrichtung ein Abtriebselement aufweist, welches mit dem Betätigungskörper gekoppelt ist.

Prinzipiell wäre es möglich, das Abtriebselement und den Betätigungskörper starr miteinander zu koppeln.

Besonders günstig ist es jedoch, wenn das Abtriebselement und der Betätigungskörper über eine Mitnahmekopplungseinrichtung miteinander gekoppelt sind, welche abhängig von der Stellung des Abtriebselements und der Stellung des Betätigungskörpers, insbesondere der Drehstellung derselben, eine Relativbewegung um einen begrenzten Drehwinkel zulässt.

Dabei könnte die Mitnahmekopplungseinrichtung ein elastisches Verbindungsglied sein.

Besonders einfach ist es jedoch, wenn die Mitnahmekopplungseinrichtung einen mitnahmefreien Freigangzustand und einen Mitnahmezustand aufweist, das heißt, dass entweder der Freigangzustand oder der Mitnahmezustand vorliegt.

Im Zusammenhang mit den bisherigen Lösungen wurden lediglich allgemein der Antrieb der Drehblockiereinrichtung erläutert, welcher es erlaubt, einen Übergang der Drehblockiereinrichtung von mindestens einer Drehblockierstellung in eine Lösestellung und umgekehrt zu realisieren.

Ferner ist vorzugsweise vorgesehen, dass die Betätigungseinrichtung für die Drehblockiereinrichtung eine motorische Antriebseinheit umfasst.

Dabei könnte eine ausschließlich der Betätigungseinrichtung für die Drehblockiereinrichtung zugeordnete motorische Antriebseinheit vorgesehen sein.

Besonders günstig ist es jedoch, wenn eine motorische Antriebseinheit als Schwenkantrieb für das Ausführen der Schwenkbewegung des Schwenklagerkörpers vorgesehen ist.

Beispielsweise ist es denkbar, zwei motorische Antriebe vorzusehen, wobei ein motorischer Antrieb für die Betätigung der Drehblockiereinrichtung vorgesehen ist und ein motorischer Antrieb zur Durchführung der Schwenkbewegung des Schwenklagerkörpers vorgesehen ist.

Insbesondere da ein Antreiben der Drehblockiereinrichtung stets zu Zeiten erfolgt, in denen keine Schwenkbewegung des Schwenklagerkörpers erfolgen soll und andererseits eine Schwenkbewegung des Schwenklagerkörpers stets dann erfolgt, wenn kein Antrieb der Drehblockiereinrichtung erforderlich ist, ist es denkbar, eine Umschalteinrichtung vorzusehen, die eine zugeführte Antriebsenergie, beispielsweise von einer Stromquelle, wechselweise von einem Antrieb auf den anderen Antrieb umschaltet, so dass die von einer separaten, beispielsweise kraftfahrzeugseitigen Versorgungseinrichtung zur Verfügung gestellte Antriebsleistung entweder für das Betätigen der Drehblockiereinrichtung oder das Schwenken des Schwenklagerkörpers genutzt werden kann.

In diesem Fall ist allerdings über eine entsprechende Sensorik zu erfassen, wann die Drehblockiereinrichtung in der Drehblockierstellung oder der Freilaufstellung steht und wann der Schwenklagerkörper in der der Arbeitsstellung entsprechenden Stellung oder der der Ruhestellung entsprechenden Stellung steht und entsprechend den von der Sensorik detektierten Stellungen die Antriebsleistung von einem Antrieb auf den anderen umzuschalten.

Im Fall eines Antriebs der Drehblockiereinrichtung unabhängig von dem Antrieb für die Schwenkbewegung des Schwenklagerkörpers besteht das Problem, dass im Fall einer Störung die Schwierigkeit auftritt, eindeutige Ausgangspositionen sowohl für die Schwenkbewegung des Schwenklagerkörpers als auch für die Drehblockiereinrichtung aufzufinden.

Besonders zweckmäßig ist es, wenn ein Abtriebselement für ein Antreiben der Drehblockiereinrichtung und ein Abtriebselement für ein Antreiben der Schwenkbewegung des Schwenklagerkörpers durch ein mittels eines Antriebselements angetriebenen Umlaufgetriebe gekoppelt sind.

In diesem Fall besteht die Möglichkeit, das Umlaufgetriebe durch eine einzige motorische Antriebseinheit, insbesondere eine einzige elektrische Antriebseinheit anzutreiben.

Besonders günstig ist es, wenn das erste Abtriebselement des Umlaufgetriebes als Schwenkantrieb auf den Schwenklagerkörper zum Verschwenken des Kugelhalses zwischen der Arbeitsstellung und der Ruhestellung wirkt und das zweite Abtriebselement des Umlaufgetriebes als Stellantrieb auf den Betätigungskörper wirkt, um diesen von der Drehblockierstellung in die Lösestellung zu bewegen.

Dabei ist das Umlaufgetriebe zweckmäßigerweise so ausgebildet, dass dieses einen Wechsel zwischen dem Abtriebselement für die Betätigung der Drehblockiereinrichtung und dem Abtriebselement für die Ausführung der Schwenkbewegung des Schwenklagerkörpers erlaubt.

Insbesondere lässt sich das Umlaufgetriebe so einsetzen, dass je nach Hemmung des Abtriebselements für die Drehblockiereinrichtung oder die Schwenkbewegung des Schwenklagerkörpers ein Antreiben der Schwenkbewegung oder der Drehblockiereinrichtung erfolgt.

Der Vorteil der Verwendung eines Umlaufgetriebes ist darin zu sehen, dass ein derartiges Planetengetriebe in einfacher Weise einen Wechsel von einem Abtrieb zum anderen Abtrieb zulässt und somit eine Antriebseinheit, beispielsweise umfassend einen elektrischen Antriebsmotor und gegebenenfalls einem Getriebe ausreicht, um wechselseitig über den einen Abtrieb die Bewegungen des Betätigungskörpers anzutreiben und über den anderen Abtrieb die Schwenkbewegung des Kugelhalses zwischen der Arbeitsstellung und der Ruhestellung anzutreiben.

Beispielsweise ist vorgesehen, dass ein Sonnenrad des Umlaufgetriebes durch den motorischen Antrieb antreibbar ist.

Ferner ist zweckmäßigerweise vorgesehen, dass ein Hohlrad des Umlaufgetriebes mit dem Abtrieb für die Drehblockiereinrichtung gekoppelt ist.

Ferner ist zweckmäßigerweise vorgesehen, dass ein Planetenradträger des Umlaufgetriebes mit dem Abtrieb für die Schwenkbewegung gekoppelt ist.

Um bei einem Umlaufgetriebe, welches durch einen einzigen motorischen Antrieb angetrieben ist, entweder die Drehblockiereinrichtung anzutreiben oder die Schwenkbewegung anzutreiben ist vorteilhafterweise vorgesehen, dass je nach Hemmung des Antriebs der Drehblockiereinrichtung oder der Schwenkbewegung ein Antreiben der Schwenkbewegung oder der Drehblockiereinrichtung erfolgt.

Eine derartige Hemmung der Schwenkbewegung oder der Drehblockiereinrichtung ist in unterschiedlicher Art und Weise realisierbar.

Die Hemmung der Schwenkbewegung ist in einfacher Weise dadurch realisierbar, dass das Schwenklagerteil relativ zur Schwenklagereinheit verriegelbar ist, so dass beim Verriegeln des Schwenklagerteils zwangsläufig eine Hemmung der Schwenkbewegung vorliegt.

Eine Hemmung des Antriebs der Drehblockiereinrichtung kann in unterschiedlichster Art und Weise erfolgen.

Eine besonders günstige Lösung sieht dabei vor, dass die Lösestellungsrasteinrichtung zur Hemmung des Antriebs der Drehblockiereinrichtung vorgesehen ist.

Hinsichtlich der Anordnung des Umlaufgetriebes sind die unterschiedlichsten Lösungen denkbar.

Eine besonders kompakte Lösung sieht vor, dass das Umlaufgetriebe koaxial zur Schwenkachse in der Schwenklagereinheit angeordnet ist.

Ferner ist vorzugsweise vorgesehen, dass das Umlaufgetriebe auf einer dem motorischen Antrieb zugewandten Seite des Betätigungselements der Drehblockiereinrichtung angeordnet ist.

Für den kompakten Aufbau ist es besonders förderlich, wenn in Richtung der Schwenkachse gesehen, das Umlaufgetriebe auf einer Seite von der motorischen Antriebseinheit angetrieben ist und auf der gegenüberliegenden Seite einen Antrieb für das Betätigungselement aufweist.

Somit ist vorzugsweise das Umlaufgetriebe in Richtung der Schwenkachse gesehen zwischen der motorischen Antriebseinheit und dem Betätigungselement angeordnet.

Ferner sind vorzugsweise das Umlaufgetriebe, der elastische Kraftspeicher und das Betätigungselement in Richtung der Schwenkachse aufeinanderfolgend, insbesondere innerhalb der Schwenklagereinheit, angeordnet.

Um insbesondere sicherzustellen, dass der Betätigungskörper selbst dann, wenn eine Beaufschlagung durch den elastischen Kraftspeicher erfolgt, nicht seine Drehblockierstellung verlässt, ist vorzugsweise vorgesehen, dass der Betätigungskörper durch die Sicherungseinrichtung in seiner Drehstellung blockierbar ist.

Insbesondere ist dabei vorgesehen, dass der Betätigungskörper durch die Sicherungseinrichtung gegen ein Erreichen seiner Lösestellung blockierbar ist, um sicherzustellen, dass der Betätigungskörper niemals selbstständig, beispielsweise bei einem Bruch des diesen in Richtung seiner aktiven Stellung beaufschlagenden elastischen Kraftspeichers, die Lösestellung der Drehblockierkörper zulässt.

Eine derartige Sicherungseinrichtung ist so ausgebildet, dass diese eine Einwirkung erfordert, um die Blockierung des Betätigungskörpers aufzuheben.

Aus diesem Grund ist zweckmäßigerweise vorgesehen, dass die Betätigungsvorrichtung für die Drehblockiereinrichtung mit der Sicherungseinrichtung gekoppelt ist, so dass über die Betätigungsvorrichtung auch ein Lösen der Blockierung des Betätigungskörpers durch die Sicherungseinrichtung aufgehoben werden kann.

Vorzugsweise ist dabei die Sicherungseinrichtung derart mit der Betätigungsvorrichtung gekoppelt, dass die Sicherungseinrichtung eine nicht durch eine Betätigung ausgelöste Bewegung des Betätigungskörpers blockiert.

Insbesondere ist die Sicherungseinrichtung so ausgebildet, dass sie bei nichtbetätigter Betätigungsvorrichtung eine Bewegung des Betätigungskörpers in seine Lösestellung blockiert.

Eine zweckmäßige Lösung sieht dabei vor, dass das Antriebselement der Betätigungsvorrichtung, beispielsweise das Abtriebselement des Planetengetriebes, mit der Sicherungseinrichtung gekoppelt ist.

Zweckmäßigerweise lässt sich dabei das Abtriebselement, beispielsweise das Abtriebselement des Umlaufgetriebes, derart ausbilden, dass über das Abtriebselement die Einwirkung auf den Betätigungskörper und die Einwirkung auf die Sicherungseinrichtung aufeinander abgestimmt sind, so dass eine Betätigung der Betätigungsvorrichtung einerseits dazu führt, dass die Blockierung des Betätigungskörpers aufgehoben wird und andererseits dazu führt, dass der Betätigungskörper von der aktiven Stellung in die inaktive Stellung bewegt wird.

Beispielsweise ist hierzu vorgesehen, dass das Abtriebselement im Zuge seiner Bewegung von der Ausgangsstellung in eine Zwischenstellung die Sicherungseinrichtung von der Sicherungsstellung in die Entsicherungsstellung überführt.

Hinsichtlich der Kopplung zwischen dem Abtriebselement und der Sicherungseinrichtung sind die unterschiedlichsten Möglichkeiten denkbar.

Beispielsweise wäre jede Art von Kopplung, beispielsweise auch über eine elektrische Steuerung denkbar.

Eine aufgrund ihrer Einfachheit besonders zweckmäßige Lösung sieht dabei vor, dass das Abtriebselement und die Sicherungseinrichtung über eine mechanische Kopplungseinrichtung miteinander gekoppelt sind.

Die mechanische Kopplungseinrichtung ist günstigerweise so ausgebildet, dass sie mittels einer Kulissenbahn die Einwirkung auf die Sicherungseinrichtung steuert.

Hinsichtlich der Ausbildung der Sicherungseinrichtung sind die unterschiedlichsten Lösungen denkbar.

Besonders zuverlässig arbeitet die Sicherungseinrichtung dann, wenn diese einen elastischen Kraftspeicher aufweist, welcher die Sicherungseinrichtung stets in Richtung ihrer den Betätigungskörper in der Drehblockierstellung sichernden oder blockierenden Stellung beaufschlagt.

Ferner ist vorzugsweise vorgesehen, dass die Sicherungseinrichtung ausgehend von ihrer Sicherungsstellung in eine entsicherte Stellung bewegbar ist.

Vorzugsweise erfolgt dabei ein Bewegen der Sicherungseinrichtung in die entsicherte Stellung ebenfalls durch die Abtriebseinheit für die Betätigungseinheit, insbesondere ebenfalls durch das zweite Abtriebselement des Verzweigungsgetriebes.

Bei der erfindungsgemäßen Lösung soll die Drehblockiereinrichtung zum und beim Erreichen der Ruhestellung unwirksam sein, so dass die Notwendigkeit besteht, die Drehblockiereinrichtung, insbesondere mit dem Betätigungskörper, während dieser Schwenkbewegungen in der Lösestellung zu halten.

Prinzipiell wäre es denkbar, hier einen separaten Antrieb vorzusehen, der den Betätigungskörper von der Drehblockierstellung in die Lösestellung bewegt und in dieser so lange hält, bis wieder die Drehblockierstellung eingenommen werden soll.

Um beim Verschwenken des Schwenklagerkörpers in die Ruhestellung die Lösestellung der Drehblockiereinrichtung mit einfachen Mitteln aufrechterhalten zu können, ist eine Lösestellungsrasteinrichtung vorgesehen, welche in einer Lösestellung des Betätigungskörpers zwischen einer eine Bewegung des Betätigungskörpers relativ zum Führungskörper freigebenden Rastlösestellung und einer den Betätigungskörper relativ zum Führungskörper festlegenden Raststellung bewegbar ist und zumindest in der Lösestellung des Betätigungskörpers durch ein Federelement in Richtung der Raststellung beaufschlagt ist.

Mit einer derartigen Lösestellungsrasteinrichtung besteht in einfacher Weise die Möglichkeit, den Betätigungskörper während der Bewegung des Kugelhalses und somit der Drehbewegung des Schwenklagerkörpers von der Arbeitsstellung in die Ruhestellung in der Lösestellung zu halten.

Mit der erfindungsgemäßen Lösung besteht insbesondere die Möglichkeit, den Schwenklagerkörper ohne dass dieser durch die Drehblockierkörper in irgendeiner Weise beaufschlagt wird, zu drehen und außerdem besteht die Möglichkeit, die Drehblockiereinrichtung beispielsweise lediglich zur Fixierung des Schwenklagerkörpers in der der Arbeitsstellung des Kugelhalses entsprechenden Drehstellung einzusetzen.

Ferner ist vorzugsweise vorgesehen, den Drehblockierkörper ständig mit einer Kraft, beispielsweise der Kraft einer Feder derart zu beaufschlagen, dass dieser die Tendenz hat in die Drehblockierstellung über zu gehen, so dass diese Kraftwirkung auf den Betätigungskörper auch dann bestehen kann, wenn dieser in der Lösestellung steht, da die Rasteinrichtung in der Lösestellung die Drehbewegung des Betätigungskörpers aufgrund der Kraftbeaufschlagung verhindert.

Insbesondere ist bei der erfindungsgemäßen Lösung vorgesehen, dass die Lösestellungsrasteinrichtung in der Lösestellung des Betätigungskörpers dann selbständig in die Raststellung übergeht, wenn der Schwenklagerkörper die der Arbeitsstellung entsprechende Drehstellung verlassen hat.

Insbesondere ist bei der erfindungsgemäßen Lösung vorgesehen, dass die Lösestellungsrasteinrichtung bei Erreichen mindestens einer Funktionsstellung der Anhängekupplung von der Raststellung in die Rastlösestellung übergeht und somit wiederum die Bewegung des Betätigungskörpers insbesondere in Richtung deren Drehblockierstellung freigibt.

Insbesondere entspricht dabei die Funktionsstellung nicht der Ruhestellung der Anhängekupplung sondern ist eine die Arbeitsstellung umfassende Stellung.

Im einfachsten Fall ist die Funktionsstellung die der Arbeitsstellung der Anhängekupplung, so dass sichergestellt ist, dass die Lösestellungsrasteinrichtung stets in der Arbeitsstellung von der Raststellung in die Rastlösestellung übergeht und somit die Drehblockiereinrichtung in der Arbeitsstellung aktiv ist.

Dabei könnte der Übergang von der Raststellung in die Rastlösestellung durch Erfassen verschiedenster die Funktion der Anhängekupplung beeinflussender Größen erfolgen.

Beispielsweise könnte elektronisch die Lage des Kugelhalses, insbesondere die Arbeitsstellung des Kugelhalses erfasst werden und dann elektronisch der Übergang der Lösestellungsrasteinrichtung von der Raststellung in die Rastlösestellung eingeleitet werden.

Die einzelnen Funktionsstellungen der Anhängekupplung lassen sich besonders einfach dadurch erfassen, dass eine Drehstellung des Schwenklagerkörpers erfasst wird, so dass die Lösestellungsrasteinrichtung in Abhängigkeit von mindestens einer bestimmten Drehstellung des Schwenklagerkörpers von der Raststellung in die Rastlösestellung übergeht.

Besonders vorteilhaft ist es dabei, wenn die Lösestellungsrasteinrichtung bei Erreichen mindestens einer vorgegebenen Drehstellung des Schwenklagerkörpers von der Raststellung in die Rastlösestellung übergeht, das heißt, dass dadurch in einfacher Weise festgelegt werden kann, ab welcher Drehstellung des Schwenklagerkörpers die Lösestellungsrasteinrichtung von der Raststellung in die Rastlösestellung übergehen soll.

Hinsichtlich der Funktionssicherheit hat es sich als besonders günstig erwiesen, wenn die Lösestellungsrasteinrichtung mechanisch gesteuert bei Erreichen der mindestens einen vorgegebenen Drehstellung des Schwenklagerkörpers von der Raststellung in die Rastlösestellung übergeht.

Durch die mechanische Steuerung des Übergangs von der Raststellung in die Rastlösestellung ist eine besonders hohe Funktionssicherheit gewährleistet, da ein wesentlicher Sicherheitsaspekt der ist, dass die Drehblockiereinrichtung in der Arbeitsstellung stets selbständig in die Drehblockierstellung übergeht und in dieser verbleibt.

Hinsichtlich der Ausbildung der Lösestellungsrasteinrichtung im Einzelnen wurden bislang keine näheren Angaben gemacht.

So sieht eine vorteilhafte Ausführungsform vor, dass die Lösestellungsrasteinrichtung einen in dem Betätigungskörper oder in der Schwenklagereinheit in einer Rastrichtung geführten Rastkörper und eine in der Schwenklagereinheit oder in dem Betätigungskörper vorgesehene Rastaufnahme umfasst, in welcher der Rastkörper in der Raststellung eingreift und in der Rastlösestellung außer Eingriff steht.

Eine derartige mechanische Lösung ist einerseits einfach im Aufbau und andererseits äußerst raumsparend.

Besonders günstig ist es, wenn der Rastkörper in dem Betätigungskörper in der Rastrichtung geführt angeordnet ist und die Rastaufnahme in dem Führungskörper angeordnet ist.

Um bei einem derartigen mechanischen Aufbau die Drehstellungen des Schwenklagerkörpers erfassen zu können, ist vorzugsweise vorgesehen, dass in der Rastaufnahme ein Tastkörper angeordnet ist, welcher das Vorliegen von Drehstellungen des Schwenklagerkörpers relativ zum Führungskörper erfasst und somit mechanisch die Drehstellungen des Schwenklagerkörpers relativ zum Führungskörper erkennen kann.

Insbesondere lässt sich dies vorteilhaft dadurch realisieren, dass der Tastkörper mit einem Tastkopf eine am Schwenklagerkörper angeordnete und mit dem Schwenklagerkörper mitbewegbare Kontur zur Erfassung der einzelnen Drehstellungen des Schwenklagerkörpers abtastet.

Um bei Erreichen der gewünschten Drehstellungen dann in einfacher Weise den Rastkörper von der Raststellung in die Rastlösestellung bewegen zu können, ist vorzugsweise vorgesehen, dass der Tastkörper in mindestens einer vorgegebenen Drehstellung des Schwenklagerkörpers den Rastkörper aus der Rastaufnahme verdrängt und diesen somit von der Raststellung in die Rastlösestellung bewegt.

Hinsichtlich der Rastrichtung des Rastkörpers wurden bislang keine näheren Angaben gemacht.

Beispielsweise könnten der Rastkörper und die Rastaufnahme so ausgerichtet sein, dass die Rastrichtung radial zur Schwenkachse verläuft.

Eine konstruktiv besonders günstig bauende Lösung sieht jedoch vor, dass der Rastkörper in einer parallel zur Schwenkachse verlaufenden Rastrichtung bewegbar ist.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Anhängekupplung, umfassend einen zwischen einer Arbeitsstellung (A) und einer Ruhestellung (R) bewegbaren Kugelhals (10) mit einem an einem ersten Ende (12) angeordneten Schwenklagerkörper (14) und einer an einem zweiten Ende (16) angeordneten Kupplungskugel (18), eine fahrzeugfest angeordnete Schwenklagereinheit (20), mittels welcher der Schwenklagerkörper (14) um eine Schwenkachse (22) zwischen der Arbeitsstellung (A) und der Ruhestellung (R) verschwenkbar aufgenommen ist, eine Drehblockiereinrichtung (50), welche in der Arbeitsstellung in einer Drehblockierstellung eine Schwenkbewegung des Schwenklagerkörpers (14) um die Schwenkachse (22) blockiert und in einer Lösestellung die Schwenkbewegung des Schwenklagerkörpers (14) freigibt, sowie eine Ruhestellungsrasteinrichtung (270), welche in einer inaktiven Stellung eine Bewegung des Schwenklagerkörpers (14) relativ zur Schwenklagereinheit (20) zulässt und in einer Raststellung den Schwenklagerkörper (14) relativ zu der Schwenklagereinheit (20) in der Ruhestellung drehfest festlegt, wobei der Ruhestellungsrasteinrichtung (270) eine Detektoreinheit (277) zugeordnet ist, welche mindestens eine aktive Stellung der Ruhestellungsrasteinrichtung (270) erfasst.
2. Anhängekupplung nach Ausführungsform 1, wobei die Detektoreinheit (277) auch eine inaktive Stellung der Ruhestellungssrasteinrichtung (270) erfasst.
3. Anhängekupplung nach Ausführungsform 1 oder 2, wobei die Detektoreinheit (277) die mindestens eine Stellung der Ruhestellungsrasteinrichtung (270) berührungslos erfasst.
4. Anhängekupplung nach einer der voranstehenden Ausführungsformen, wobei die Detektoreinheit (277) die mindestens eine Stellung der Ruhestellungsrasteinrichtung (270) durch ein durch die mindestens eine Stellung der Ruhestellungsrasteinrichtung (270) beeinflusstes Magnetfeld erfasst.
5. Anhängekupplung nach Ausführungsform 4, wobei die Detektoreinheit (277) einen Magnetfeldsensor (278) aufweist.
6. Anhängekupplung nach Ausführungsform 5, wobei der Magnetfeldsensor (278) ein Magnetfeld eines durch die Bewegung der Ruhestellungsrasteinrichtung (270) bewegbaren Magneten erfasst.
7. Anhängekupplung nach Ausführungsform 5, wobei der Magnetfeldsensor (278) ein Magnetfeld eines diesem stationär zugeordneten und durch die Stellungen der Ruhestellungsrasteinrichtung (270) beeinflussten Magneten (289) erfasst.
8. Anhängekupplung nach einer der voranstehenden Ausführungsformen, wobei die Detektoreinheit (277) mindestens die aktive Stellung der Ruhestellungsrasteinrichtung (270) durch eine die Ruhestellungsrasteinrichtung (270) übergreifende Abdeckung der Schwenklagereinheit (20) hindurch erfasst.
9. Anhängekupplung nach einer der voranstehenden Ausführungsformen, wobei die Ruhestellungsrasteinrichtung (270) von der Drehblockiereinrichtung (50) unabhängig ist.
10. Anhängekupplung nach einer der voranstehenden Ausführungsformen, wobei die Ruhestellungsrasteinrichtung (270) bei Erreichen der der Ruhestellung (R) entsprechenden Schwenkstellung des Schwenklagerkörpers (14) aufgrund eines in dieser vorgesehenen Federelements (276) selbsttätig in die aktive Stellung übergeht.
11. Anhängekupplung nach einer der voranstehenden Ausführungsformen, wobei die Ruhestellungsrasteinrichtung (270) dann, wenn sie nicht in der aktiven Stellung steht, stets in einer Rastbereitschaftsstellung steht.
12. Anhängekupplung nach einer der voranstehenden Ausführungsformen, wobei eine Deaktivierungseinheit (280) vorgesehen ist, mit welcher die Ruhestellungsrasteinrichtung (270) unabhängig von der Schwenkbewegung des Schwenklagerkörpers (14) von der aktiven Stellung in die inaktive Stellung überführbar ist.
13. Anhängekupplung nach Ausführungsform 12, wobei die Ruhestellungsrasteinrichtung (270) mittels der Deaktivierungseinheit (280) in Abhängigkeit von einem bestimmten Funktionszustand der Anhängekupplung von der aktiven Stellung in die inaktive Stellung überführbar ist.
14. Anhängekupplung nach Ausführungsform 13, wobei die Ruhestellungsrasteinrichtung (270) mittels der Deaktivierungseinheit (280) vor einem Verschwenken des Schwenklagerkörpers (14) von der Ruhestellung (R) in die Arbeitsstellung (A) von der aktiven Stellung in die inaktive Stellung überführbar ist.
15. Anhängekupplung nach einer der voranstehenden Ausführungsformen, wobei die Ruhestellungsrasteinrichtung (270) mittels der Deaktivierungseinheit (280) durch eine mit der Deaktivierungseinheit (280) zusammenwirkende Antriebseinheit (182) von der aktiven Stellung in die inaktive Stellung überführbar ist.
16. Anhängekupplung nach einer der voranstehenden Ausführungsformen, wobei die Ruhestellungsrasteinrichtung (270) einen von einer aktiven Stellung in eine inaktive Stellung bewegbaren Rastkörper (274) umfasst.
17. Anhängekupplung nach Ausführungsform 16, wobei der Rastkörper (274) an dem Schwenklagerkörper (14) oder der Schwenklagereinheit (20) angeordnet, in einer Rastrichtung bewegbar ist, und mit einer in der Schwenklagereinheit (20) oder dem Schwenklagerkörper (14) angeordneten Rastaufnahme (282) in der aktiven Stellung in Eingriff bringbar ist.
18. Anhängekupplung nach Ausführungsform 17, wobei der in der Rastrichtung bewegbare Rastkörper (274) im Schwenklagerkörper (14) angeordnet ist und wobei die Rastaufnahme (282) an der Schwenklagereinheit (20) angeordnet ist.
19. Anhängekupplung nach einer der Ausführungsformen 17 oder 18, wobei der Rastaufnahme (282) ein Betätigungskörper (284) der Deaktivierungseinheit (280) zugeordnet ist, der bei wirksamer Deaktivierungseinheit (280) den Rastkörper (274) aus der Rastaufnahme (282) verdrängt.
20. Anhängekupplung nach einer der voranstehenden Ausführungsformen, wobei die Anhängekupplung eine Zustandsauswerteeinheit (350) aufweist, welche mindestens ein Signal der Detektoreinheit (277) auswertet und ein eine gesicherte Ruhestellung anzeigendes Signal (RS) erzeugt.
21. Anhängekupplung nach einer der voranstehenden Ausführungsformen, wobei die Anhängekupplung eine Sicherungseinrichtung (330) aufweist, welche die Drehblockiereinrichtung (50) in der Drehblockierstellung gegen einen Übergang in die Lösestellung sichert.
22. Anhängekupplung nach Ausführungsform 21, wobei der Sicherungseinrichtung (330) ein Detektor (344) zugeordnet ist, welcher eine sichernde oder entsichernde Stellung eines die Drehblockierstellung sichernden Sicherungsstifts (294) erfasst.
23. Anhängekupplung nach einer der Ausführungsformen 20 bis 22, wobei der Detektor (344) der Sicherungseinrichtung (330) mit der Zustandsauswerteeinheit (350) zusammenwirkt und wobei die Zustandsauswerteeinheit (350) ein eine gesicherte Drehblockierstellung der Drehblockiereinrichtung (50) anzeigendes Signal (AS) erzeugt.
24. Anhängekupplung nach einer der Ausführungsformen 20 bis 23, wobei die Zustandsauswerteeinheit (350) nur dann das eine gesicherte Ruhestellung (R) anzeigende Signal (RS) erzeugt, wenn die Detektoreinheit (277) die aktive Stellung der Ruhestellungsrasteinrichtung (270) und außerdem der Detektor (344) die entsichernde Stellung der Sicherungseinrichtung (330) meldet.
25. Anhängekupplung nach einer der Ausführungsformen 20 bis 24, wobei die Zustandsauswerteeinheit (350) nur dann das eine gesicherte Arbeitsstellung (A) anzeigende Signal (AS) erzeugt, wenn der Detektor (344) die sichernde Stellung der Sicherungseinrichtung (330) und die Detektoreinheit (277) die inaktive Stellung der Ruhestellungsrasteinrichtung (270) meldet.
26. Anhängekupplung nach einer der voranstehenden Ausführungsformen, wobei die Drehblockiereinrichtung (50) mindestens zwei Drehblockierkörper (54) aufweist, die mittels eines Führungskörpers (40) in einer Führungsrichtung (58) bewegbar geführt sind, wobei die Drehblockierkörper (54) in der Arbeitsstellung (A) durch Bewegung in der Führungsrichtung (58) in eine Drehblockierstellung bringbar sind und in dieser mit jeweils einer Aufnahme (60) im Schwenklagerkörper (14) in Eingriff stehen, um eine Schwenkbewegung des Schwenklagerkörpers (14) um die Schwenkachse (22) relativ zum Führungskörper (40) zu blockieren, und in eine Lösestellung bringbar sind und in dieser mit der jeweiligen Aufnahme (60) außer Eingriff stehen, und wobei die Drehblockiereinrichtung (50) einen für jeden der Drehblockierkörper (54) jeweils eine quer zur Führungsrichtung (58) verlaufende Druckfläche (66) aufweisenden Betätigungskörper (52) umfasst, durch dessen Bewegung in einer Betätigungsrichtung (72) die mindestens zwei Drehblockierkörper (54) in der Führungsrichtung (58) bewegbar und beaufschlagbar sind.
27. Anhängekupplung nach Ausführungsform 26, wobei die Drehblockierkörper (54) um den Betätigungskörper (52) herum angeordnet sind.
28. Anhängekupplung nach einer der Ausführungsformen 26 oder 27, wobei der Betätigungskörper (52) um die Schwenkachse (22) drehbar angeordnet ist und insbesondere sich über einen Winkelbereich um die Schwenkachse (22) erstreckende und parallel zur Führungsrichtung (58) variierende Keilflächen (66) aufweist.
29. Anhängekupplung nach einer der Ausführungsformen 26 bis 28, wobei die Führungsrichtung (58) mit mindestens einer Komponente in radialer Richtung zur Schwenkachse (22) verläuft.
30. Anhängekupplung nach einer der Ausführungsformen 26 bis 29, wobei der Drehblockierkörper (54) durch den sich in radialer Richtung an den Schwenklagerkörper (14) anschließenden Führungskörper (40) geführt ist.
31. Anhängekupplung nach einer der Ausführungsformen 26 bis 30, wobei der Führungskörper (40) eine Führungshülse (44) mit der Führungsaufnahme (56) für den jeweiligen Drehblockierkörper (54) aufweist.
32. Anhängekupplung nach einer der Ausführungsformen 26 bis 31, wobei der Führungskörper (40) den Betätigungskörper (52) bewegbar führt.
33. Anhängekupplung nach einer der Ausführungsformen 26 bis 32, wobei der Führungskörper (40) ein Schwenklager für den Schwenklagerkörper (14) bildet.
34. Anhängekupplung nach einer der Ausführungsformen 26 bis 33, wobei der Führungskörper (40) Teil der fahrzeugfest angeordneten Schwenklagereinheit (20) ist.
35. Anhängekupplung nach einer der Ausführungsformen 26 bis 34, wobei der Betätigungskörper (52) von dem Führungskörper (40) umschlossen ist und wobei insbesondere der Schwenklagerkörper (14) den Führungskörper (40) umgreift.
36. Anhängekupplung nach einer der voranstehenden Ausführungsformen, wobei der Schwenklagerkörper (14) einen die Schwenklagereinheit (20) außenliegend umschließenden Außenkörper bildet, der gegenüber der Schwenklagereinheit (20) in Richtung der Schwenkachse (22) unverschiebbar angeordnet ist, und wobei insbesondere das erste Ende des Kugelhalses (10) an dem Außenkörper (14) angesetzt ist.
37. Anhängekupplung nach einer der voranstehenden Ausführungsformen, wobei der Schwenklagerkörper (14) einen einen Teilbereich der Drehblockiereinrichtung (50) außenliegend umschließenden Außenkörper bildet, der gegenüber dem Führungskörper (40) in Richtung der Schwenkachse (22) unverschiebbar angeordnet ist.

Weitere Merkmale und Vorteile der erfindungsgemäßen Lösung sind Gegenstand der nachfolgenden Beschreibung sowie der zeichnerischen Darstellung eines Ausführungsbeispiels;

In der Zeichnung zeigen:
- Fig. 1: eine Rückansicht eines Kraftfahrzeugs mit einer erfindungsgemäßen Anhängekupplung;
- Fig. 2: eine Draufsicht auf ein erstes Ausführungsbeispiel einer erfindungsgemäßen Anhängekupplung mit Blick in Fahrtrichtung auf die an einem Fahrzeugheck montierte Anhängekupplung, wobei die Anhängekupplung in ihrer Arbeitsstellung steht;
- Fig. 3: eine Draufsicht auf die Anhängekupplung in Fig. 2 in Richtung der Schwenkachse;
- Fig. 4: eine Ansicht entsprechend Fig. 2 der in der Ruhestellung stehenden Anhängekupplung;
- Fig. 5: eine Draufsicht auf die Anhängekupplung gemäß der in der Ruhestellung stehenden Anhängekupplung gemäß Fig. 4 in Richtung der Schwenkachse;
- Fig. 6: eine Darstellung eines Schnitts längs Linie 6-6 in Fig. 3;
- Fig. 7: einen Schnitt längs Linie 7-7 in Fig. 6 in der Arbeitsstellung;
- Fig. 8: eine Darstellung eines Schnitts ähnlich Fig. 7 in der Ruhestellung;
- Fig. 9: einen Schnitt längs Linie 9-9 in Fig. 6 ohne Tragplatte und Haltering;
- Fig. 10: eine perspektivische Darstellung eines Hohlrads und einer mit diesem zusammenwirkenden Antriebshülse;
- Fig. 11: eine perspektivische Explosionsdarstellung des Schwenklagerkörpers mit der Abdeckung;
- Fig. 12: einen vergrößerten Schnitt gemäß Fig. 6 in der Arbeitsstellung;
- Fig. 13: einen vergrößerten Schnitt ähnlich Fig. 12 in der Ruhestellung;
- Fig. 14: einen Schnitt längs Linie 14-14 in Fig. 18,
- Fig. 15: einen Schnitt längs Linie 15-15 in Fig. 17;
- Fig. 16: einen Schnitt ähnlich Fig. 15 weitergedreht in Richtung der Ruhestellung;
- Fig. 17: einen Schnitt längs Linie 17-17 in Fig. 15;
- Fig. 18: einen Schnitt längs Linie 18-18 in Fig. 14;
- Fig. 19: in der Ausgangsstellung;
Fig. 19a eine Draufsicht auf das Hohlrad des Planetengetriebes von Seiten der Antriebshülse;
Fig. 19b eine perspektivische Darstellung des Zusammenwirkens des Hohlrades in der Stellung gemäß Fig. 19a mit der Deaktivierungseinheit für die Ruhestellungsrasteinrichtung und mit der Drehblockiereinrichtung;
Fig. 19c eine perspektivische Darstellung des Zusammenwirkens des Hohlrades in der Stellung gemäß Fig. 19a mit einer Sicherungseinrichtung und mit der Drehblockiereinrichtung;
- Fig. 20: in der ersten gegenüber der Ausgangsstellung gedrehten Stellung des Hohlrads zum Lösen der Sicherungseinrichtung und ohne Einwirkung auf die Drehblockiereinrichtung;
Fig. 20a eine Draufsicht auf das Hohlrad des Planetengetriebes von Seiten der Antriebshülse;
Fig. 20b eine perspektivische Darstellung des Zusammenwirkens des Hohlrades in der Stellung gemäß Fig. 20a mit der Deaktivierungseinheit für die Ruhestellungsrasteinrichtung und mit der Drehblockiereinrichtung;
Fig. 20c eine perspektivische Darstellung des Zusammenwirkens des Hohlrades in der Stellung gemäß Fig. 20a mit einer Sicherungseinrichtung und mit der Drehblockiereinrichtung;
- Fig. 21: in einer maximal gegenüber der Ausgangsstellung gedrehten Stellung des Hohlrads ohne Einwirkung auf die Drehblockiereinrichtung;
Fig. 21a eine Draufsicht auf das Hohlrad des Planetengetriebes von Seiten der Antriebshülse;
Fig. 21b eine perspektivische Darstellung des Zusammenwirkens des Hohlrades in der Stellung gemäß Fig. 21a mit der Deaktivierungseinheit für die Ruhestellungsrasteinrichtung und mit der Drehblockiereinrichtung;
Fig. 21c eine perspektivische Darstellung des Zusammenwirkens des Hohlrades in der Stellung gemäß Fig. 21a mit einer Sicherungseinrichtung und mit der Drehblockiereinrichtung;
- Fig. 22: in einer gegenüber der Ausgangsstellung gedrehten Stellung des Hohlrades bei Erreichen der Lösestellung der Drehblockierrichtung;
Fig. 22a eine Draufsicht auf das Hohlrad des Planetengetriebes von Seiten der Antriebshülse;
Fig. 22b eine perspektivische Darstellung des Zusammenwirkens des Hohlrades in der Stellung gemäß Fig. 22a mit der Deaktivierungseinheit für die Ruhestellungsrasteinrichtung und mit der Drehblockiereinrichtung;
Fig. 22c eine perspektivische Darstellung des Zusammenwirkens des Hohlrades in der Stellung gemäß Fig. 22a mit einer Sicherungseinrichtung und mit der Drehblockiereinrichtung;
- Fig. 23: in einer gegenüber der Ausgangsstellung gedrehten Stellung des Hohlrades bei Erreichen der Ruhestellung des Schwenklagerkörpers;
Fig. 23a eine Draufsicht auf das Hohlrad des Planetengetriebes von Seiten der Antriebshülse;
Fig. 23b eine perspektivische Darstellung des Zusammenwirkens des Hohlrades in der Stellung gemäß Fig. 23a mit der Deaktivierungseinheit für die Ruhestellungsrasteinrichtung und mit der Drehblockiereinrichtung;
Fig. 23c eine perspektivische Darstellung des Zusammenwirkens des Hohlrades in der Stellung gemäß Fig. 23a mit einer Sicherungseinrichtung und mit der Drehblockiereinrichtung;
- Fig. 24: in einer gegenüber der Ausgangsstellung gedrehten Stellung des Hohlrads und Deaktivieren der Ruhestellungsrasteinrichtung;
Fig. 24a eine Draufsicht auf das Hohlrad des Planetengetriebes von Seiten der Antriebshülse;
Fig. 24b eine perspektivische Darstellung des Zusammenwirkens des Hohlrades in der Stellung gemäß Fig. 24a mit der Deaktivierungseinheit für die Ruhestellungsrasteinrichtung und mit der Drehblockiereinrichtung;
Fig. 24c eine perspektivische Darstellung des Zusammenwirkens des Hohlrades in der Stellung gemäß Fig. 24a mit einer Sicherungseinrichtung und mit der Drehblockiereinrichtung;
- Fig. 25: in einer gegenüber der Ausgangsstellung gedrehten Stellung des Hohlrads bei einem Übergang der Drehblockiereinrichtung in die Drehblockierstellung;
Fig. 25a eine Draufsicht auf das Hohlrad des Planetengetriebes von Seiten der Antriebshülse;
Fig. 25b eine perspektivische Darstellung des Zusammenwirkens des Hohlrades in der Stellung gemäß Fig. 25a mit der Deaktivierungseinheit für die Ruhestellungsrasteinrichtung und mit der Drehblockiereinrichtung und
Fig. 25c eine perspektivische Darstellung des Zusammenwirkens des Hohlrades in der Stellung gemäß Fig. 25a mit einer Sicherungseinrichtung und mit der Drehblockiereinrichtung.

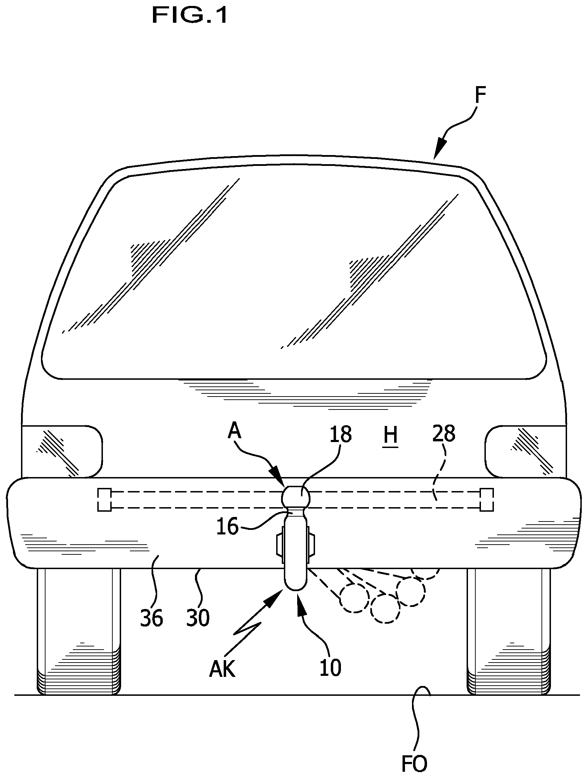

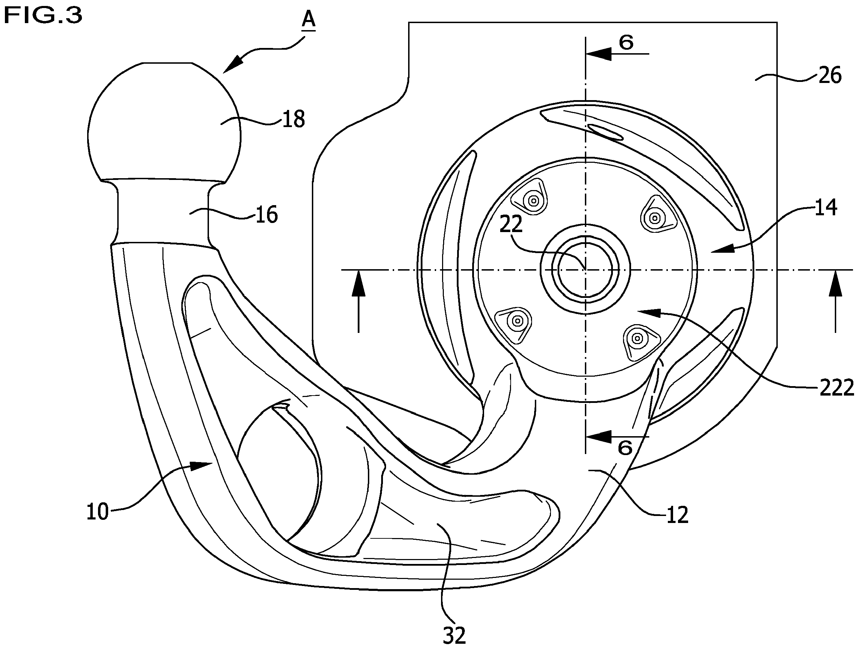

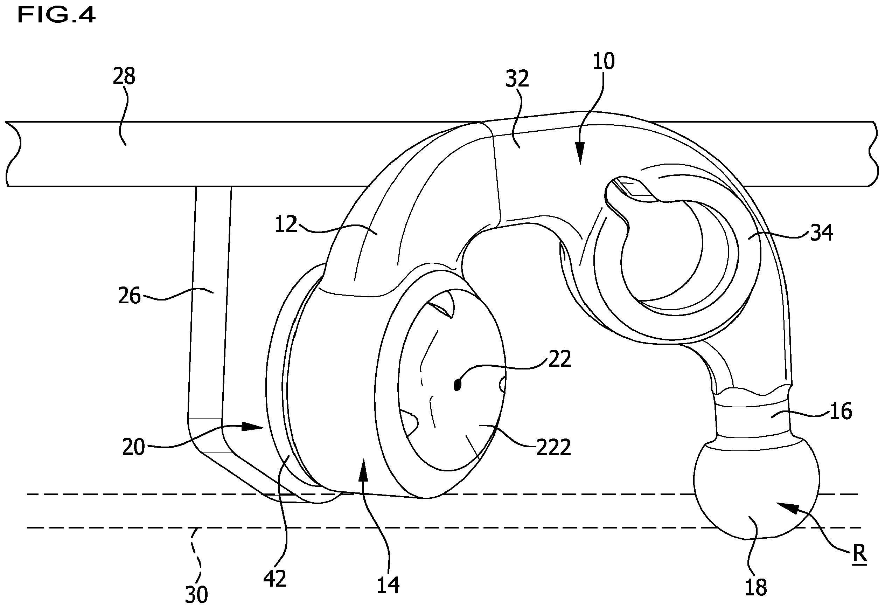

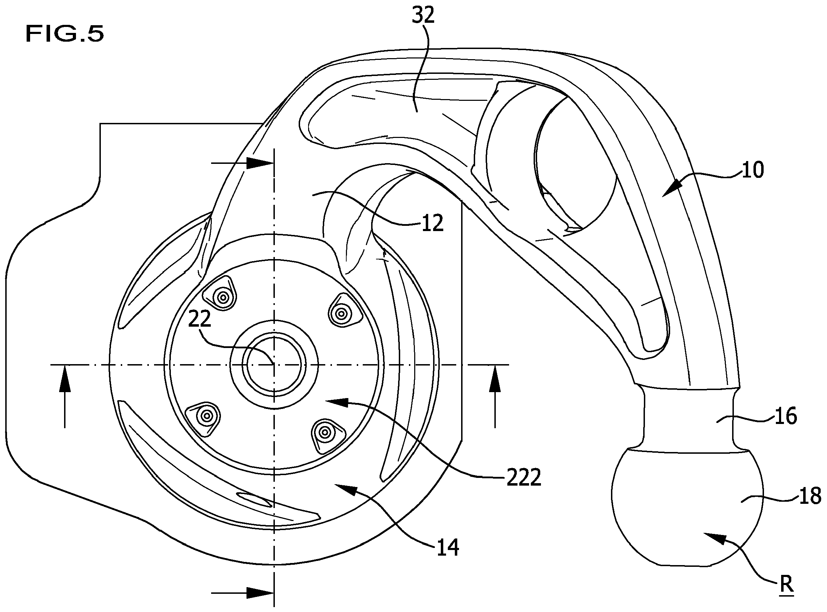

Ein erstes Ausführungsbeispiel einer erfindungsgemäßen Anhängekupplung AK für ein Kraftfahrzeug, dargestellt in Fig. 1, 2 und 3 in einer Arbeitsstellung A und in Fig. 4 und 5 in einer Ruhestellung R, umfasst einen als Ganzes mit 10 bezeichneten Kugelhals, welcher mit einem ersten Ende 12 an einem Schwenklagerkörper 14 gehalten ist und an einem zweiten Ende 16 eine als Ganzes mit 18 bezeichnete Kupplungskugel trägt, an welcher eine Kupplungskugelaufnahme eines Anhängers fixierbar ist.

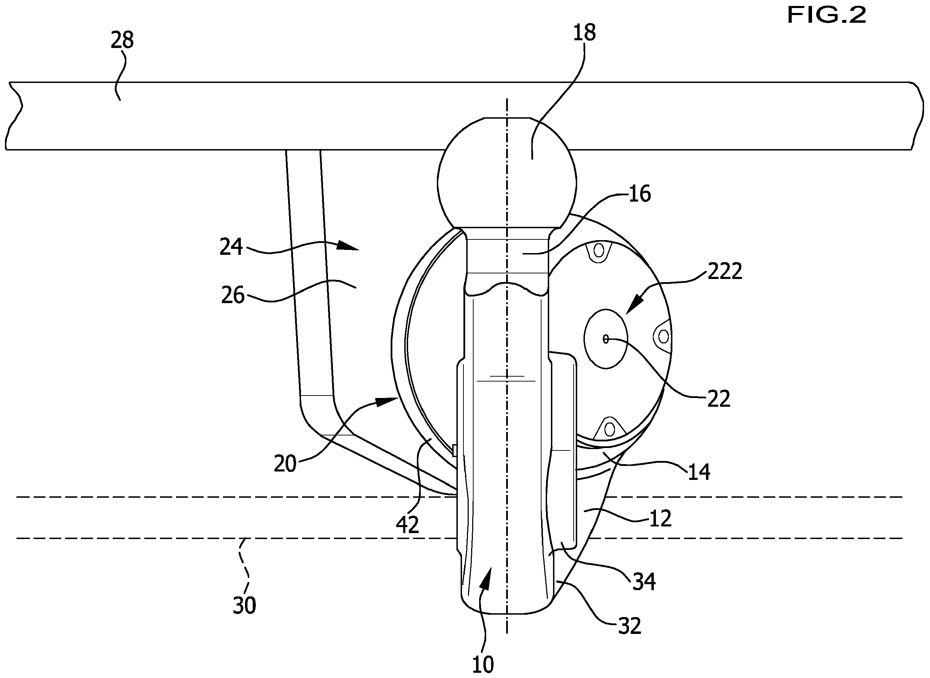

Der Schwenklagerkörper 14 ist durch eine als Ganzes mit 20 bezeichnete Schwenklagereinheit um eine Schwenkachse 22 relativ zu einem fahrzeugfesten Träger 24 schwenkbar gelagert, wobei der Träger 24 vorzugsweise eine die Schwenklagereinheit 20 haltende Tragplatte 26 aufweist, welche sich vorzugsweise in einer zur Schwenkachse 22 senkrechten Ebene erstreckt, und einen fahrzeugfesten Querträger 28 aufweist, welcher in bekannter Weise an einem Heckbereich H einer Fahrzeugkarosserie F befestigbar ist, und zwar so, dass die Schwenklagereinheit 20 und der Träger 24 auf einer einer Fahrbahnoberfläche FO abgewandten Seite einer Unterkante 30 einer Stoßfängereinheit 36 liegen, und durch die Stoßfängereinheit 36 abgedeckt sind (Fig. 2).

In der in Fig. 1 und 2 dargestellten Arbeitsstellung untergreift der Kugelhals 10 mit einem sich an das erste Ende 12 anschließenden Abschnitt 32 die Unterkante 30 der Stoßfängereinheit 36, so dass das zweite Ende 16 und die Kupplungskugel 18 mitsamt einer Steckdosenaufnahme 34 auf einer der Fahrzeugkarosserie F abgewandten Seite der hinteren Stoßfängereinheit 36 stehen, während in der Ruhestellung sowohl die Schwenklagereinheit 20 als auch der gesamte Kugelhals 10 mitsamt der Kupplungskugel 18 von der hinteren Stoßfängereinheit 36 gegen Sicht von hinten abgedeckt sind.

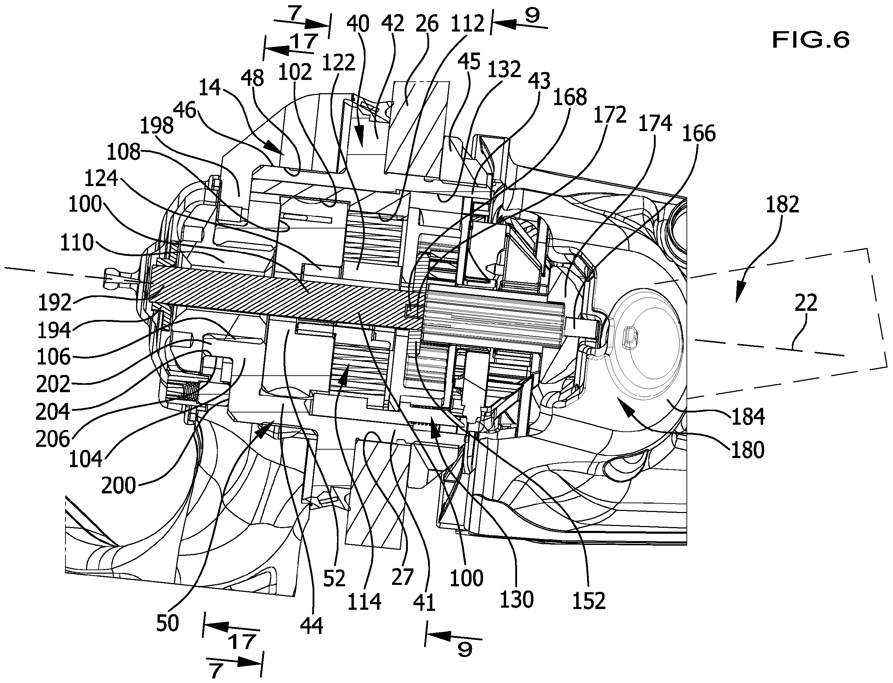

Die Schwenklagereinheit 20 umfasst, wie in Fig. 6 bis 9 dargestellt, einen Führungskörper 40, welcher mit einem Flansch 42 fest mit der Tragplatte 26 verbunden ist und eine sich ausgehend von dem Flansch 42 von der Tragplatte 26 weg erstreckende Führungshülse 44, an welcher der Schwenklagerkörper 14 drehbar gelagert ist.

Hierzu umfasst die Führungshülse 44 eine zylindrische Außenmantelfläche 46, an welcher der Schwenklagerkörper 14 mit einer zylindrischen Innenfläche 48 anliegt und dadurch um die Schwenkachse 22 eine Drehführung um die Achse 22 erfährt, so dass der Schwenklagerkörper 14 derart relativ zum Führungskörper 40 drehbar ist, dass der Kugelhals 10 von der Arbeitsstellung A in die Ruhestellung R und umgekehrt verschwenkbar ist.

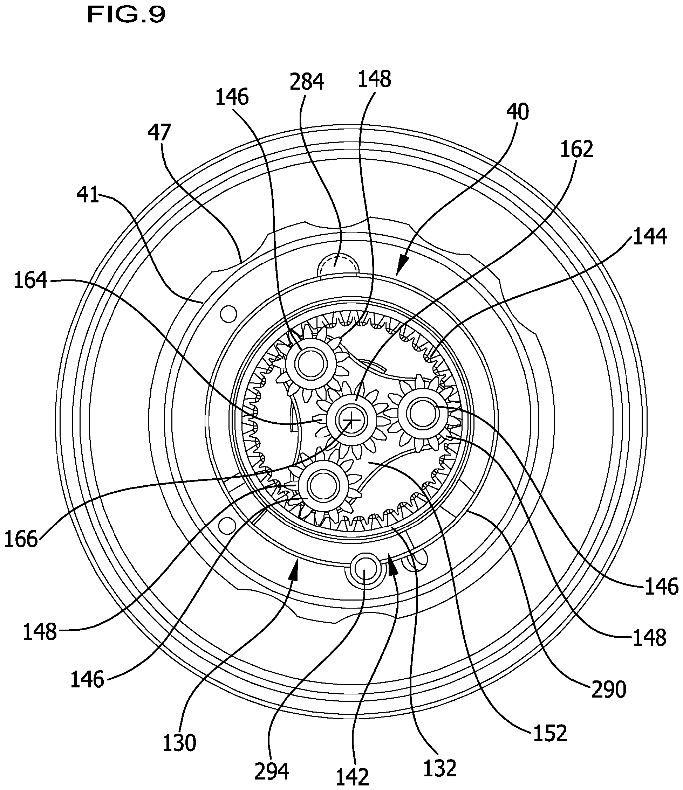

Der Führungskörper 40 umfasst außerdem einen sich durch einen Durchbruch 27 in der Tragplatte 26 erstreckenden Fortsatz 41, der eine auf einer dem Flansch 42 gegenüberliegenden Seite auf den Fortsatz 41 folgende Aufnahme 43 für einen an dieser fixierbaren Haltering 45 trägt, so dass der Führungskörper 40 durch den Fortsatz 41 aufgrund seiner nicht rotationssymmetrischen sondern mit einer radial variierenden Außenkontur 47 (Fig. 9) in dem entsprechend geformten Durchbruch 27 durch Formschluss drehfest in der Tragplatte 26 sitzt und durch den Flansch 42 sowie den Haltering 45, die auf gegenüberliegenden Seiten der Tragplatte 26 anliegen, an dieser fixiert ist.

Der Führungskörper 40 bildet somit durch seine feste Verbindung mit der Trägerplatte 26 und dem Träger 24 die fahrzeugfeste Drehlagerung für den Schwenklagerkörper 14.

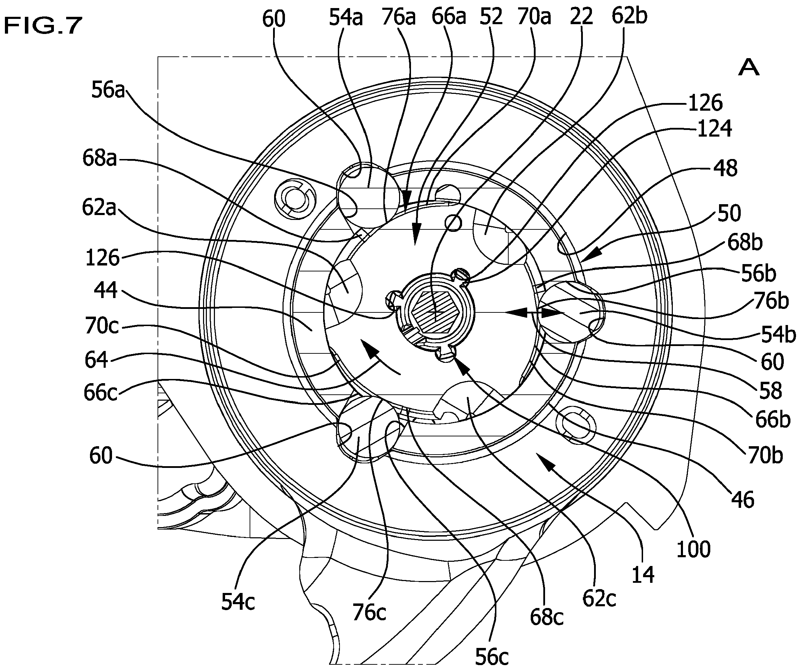

Zur Fixierung des Schwenklagerkörpers 14 in der Arbeitsstellung A ist die Schwenklagereinheit 20 mit einer als Ganzes mit 50 bezeichneten Drehblockiereinrichtung (Fig. 7) versehen, welche einen Betätigungskörper 52, mehrere durch den Betätigungskörper 52 beaufschlagbare Drehblockierkörper 54 umfasst, von denen jeder in einer Führungsaufnahme 56 der Führungshülse 44 in einer im Wesentlichen radial zur Schwenkachse 22 verlaufenden Führungsrichtung 58 bewegbar geführt sind, sowie sich ausgehend von der Innenfläche 48 des Schwenklagerkörpers 14 in diesen hineinerstreckende Aufnahmen 60, mit denen die Drehblockierkörper 54 in der Arbeitsstellung A in Eingriff bringbar sind, wobei die Aufnahmen 60 in radialer Richtung zur Schwenkachse 22 zunehmend einen geringeren Abstand voneinander aufweisende Wandflächen haben.

Umfasst beispielsweise die Drehblockiereinrichtung 50, wie im Zusammenhang mit Fig. 7 und Fig. 9 beim ersten Ausführungsbeispiel dargestellt, einen Satz von drei Drehblockierkörpern 54a, 54b und 54c, so weist die Führungshülse 44 einen entsprechenden Satz von drei Führungsaufnahmen 56a, 56b und 56c auf, in welchen die Drehblockierkörper 54a, 54b und 54c in der im Wesentlichen radial zur Schwenkachse 22 verlaufenden Führungsrichtung 58 verschiebbar geführt sind, und der Schwenklagerkörper 14 ist mit einem Satz von ersten Aufnahmen 60a, 60b und 60c versehen, mit welchen die Drehblockierkörper 54a, 54b und 54c in der Arbeitsstellung A in Eingriff bringbar sind.

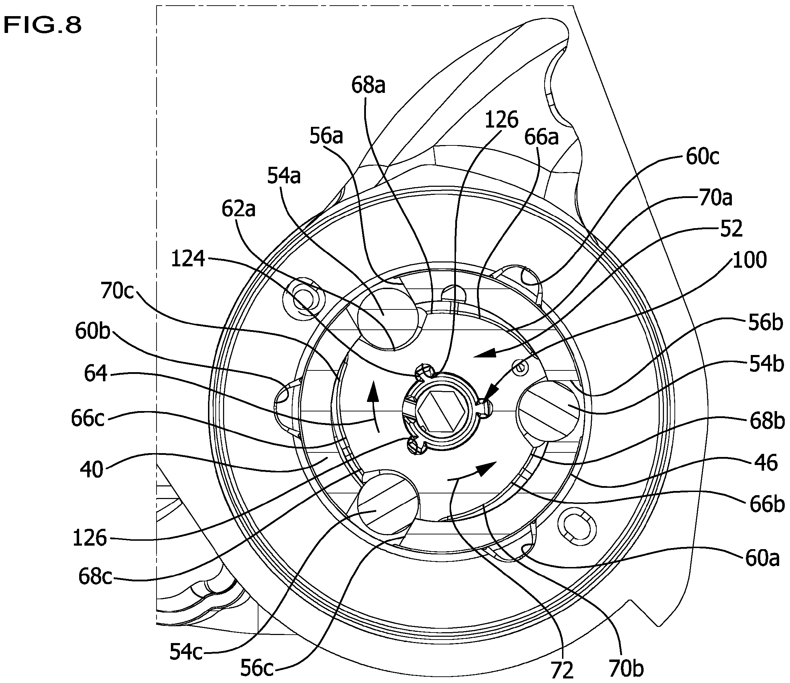

Zum geeigneten Bewegen und Positionieren der Drehblockierkörper 54 in der Führungsrichtung 58 ist der Betätigungskörper 52 mit einem der Zahl der Drehblockierkörper 54 entsprechenden Satz von insgesamt drei Rückzugsaufnahmen 62a, 62b und 62c und drei sich in einer Umlaufrichtung 64 an die Rückzugsaufnahmen 62a, 62b, 62c anschließenden Druckflächen 66a, 66b und 66c, die als radial zur Schwenkachse 22 wirkende Keilflächen ausgebildet sind, versehen, wobei die Drehblockierkörper 54 in ihrer Lösestellung in die Rückzugsaufnahmen 62a, 62b, 62c soweit eintauchen können (Fig. 8), dass sie nicht mehr über die Außenmantelfläche 46 der Führungshülse 44 überstehen, und wobei sich die Druckflächen 66a, 66b, 66c jeweils von einem sich unmittelbar an die jeweilige Rückzugsaufnahmen 62 anschließenden radial innenliegenden Anfangsbereich 68a, 68b und 68c mit zunehmender Erstreckung in der Umlaufrichtung 64 zunehmend radial zur Schwenkachse 22 nach außen erstrecken, bis zu jeweils einem radial außenliegenden Endbereich 70a, 70b und 70c und somit als bei einer Drehbewegung des Betätigungskörpers 52 als Keilflächen auf die Drehblockierkörper 54 wirken, um diese in ihre Drehblockierstellung zu bewegen.

Vorzugsweise verlaufen dabei die Druckflächen 66 als Spiral- oder Evolventensegmente relativ zur Schwenkachse 22.

Um die Drehblockierkörper 54 entweder in ihrer Drehblockierstellung durch Beaufschlagen derselben mit den Druckflächen 66 zwischen dem Anfangsbereich 68 und dem Endbereich 70 zu halten oder in der Lösestellung in die Rückzugsaufnahme 62 eintauchen zu lassen, ist der Betätigungskörper 52 ebenfalls um die Schwenkachse 22, insbesondere koaxial zu dieser, drehbar und zwar so, dass entweder der Satz von Rückzugsaufnahmen 62a, 62b und 62c den Drehblockierkörpern 54 zugewandt ist und diesen, wie in Fig. 8 dargestellt, in seiner inaktiven Stellung die Möglichkeit gibt, in die Rückzugsaufnahmen 62 in radialer Richtung zur Schwenkachse 22 hin einzutauchen, um den jeweiligen Drehblockierkörpern 54 die Möglichkeit zu eröffnen, die ersten Aufnahmen 60 mitsamt dem Schwenklagerkörper 14 hinsichtlich einer Drehung um die Schwenkachse 22 relativ zum Führungskörper 40 freizugeben, so dass der Schwenklagerkörper 14 mit dem Kugelhals 10 relativ zur Führungshülse 44 ungehindert und frei drehbar ist, wie in Fig. 8 dargestellt, wobei in diesem Fall die Drehblockierkörper 54 sich nicht über die Außenmantelfläche 46 der Führungshülse 44 hinaus erstrecken.

Eine Drehung des Betätigungskörpers 52 bei in den Rückzugsaufnahmen 62 sitzenden Drehblockierkörper 54 in einer Drehrichtung 72 entgegengesetzt zur Umlaufrichtung 64 bewirkt, dass die Drehblockierkörper 54 aus den Rückzugsaufnahmen 62 heraus bewegt werden und zunächst in der aktiven Stellung des Betätigungskörpers 52 auf den Anfangsbereichen 68 der Druckflächen 66 aufsitzen, dabei jedoch beispielsweise in die ersten Aufnahmen 60 eintauchen und damit die freie Drehbarkeit des Schwenklagerkörpers 14 relativ zum Führungskörper 40 unterbinden.

Wird der Betätigungskörper 52 in der Drehrichtung 72 entgegengesetzt zur Umlaufrichtung 64 weitergedreht, so wirken immer weiter radial gegenüber der Schwenkachse 22 außen liegenden Bereiche der Druckflächen 66 auf die Drehblockierkörper 54 und drücken somit die Drehblockierkörper 54 zunehmend in der Arbeitsstellung A des Kugelhalses 10 in die ersten Aufnahmen 60a, 60b und 60c hinein (Fig. 7), um somit eine im Wesentlichen spielfreie Fixierung des Schwenklagerkörpers 14 relativ zum Führungskörper 40, in diesem Fall zur Führungshülse 44, zu erreichen.

In der Drehblockierstellung der Drehblockierkörper 54 steht der Betätigungskörper 52 in seiner aktiven Stellung so, dass die Drehblockierkörper 54, wie in Fig. 7 dargestellt, ungefähr auf Mittelbereichen 76, die zwischen den Anfangsbereichen 68 und den Endbereichen 70 liegen, der Druckflächen 66 aufsitzen und von diesen beaufschlagt werden.

Um dem Betätigungskörper 52 die Möglichkeit zu eröffnen, jeweils jeden der drei Drehblockierkörper 54 optimal zu beaufschlagen, ist vorgesehen, dass in der aktiven Stellung eine Zentrierung des Betätigungskörpers 52 entsprechend der Lage der Drehblockierkörper 54 erfolgt. Insbesondere ist der Betätigungskörper 52 so in der Führungshülse 44 gelagert, dass sich der Betätigungskörper 52 aufgrund des radialen Spiels relativ entsprechend der durch Fertigungstoleranzen bedingten Lage der Drehblockierkörper 54 innerhalb des Führungskörpers 40 selbst zentrieren kann, wobei die Selbstzentrierung des Betätigungskörpers 52 geringfügig von einer koaxialen Anordnung zur geometrischen Schwenkachse 22 abweichen kann.

Aufgrund der Selbstzentrierung wirken die Drehblockierkörper 54a, 54b und 54c in der jeweiligen Führungsrichtung 58a, 58b und 58c mit ungefähr gleich großen Kräften auf die Aufnahmen 60a, 60b und 60c, so dass auch die auf den Betätigungskörper 52 wirkenden Reaktionskräfte ungefähr gleich groß sind.

Bei dem dargestellten Ausführungsbeispiel der erfindungsgemäßen Lösung sind die Drehblockierkörper 54 in den Führungsaufnahmen 56 in gleichen Winkelabständen um die Schwenkachse 22 herum angeordnet, so dass die durch die Selbstzentrierung ungefähr gleich großen Reaktionskräfte auf einen der Drehblockierkörper 54a, 54b, 54c sich zu gleichen Teilen auf die anderen Drehblockierkörper 54b und 54c, 54a und 54c sowie 54a und 54b auswirken und sich somit insgesamt aufheben, so dass der Betätigungskörper 52 im Kräftegleichgewicht steht und keine zusätzliche Abstützung benötigt.

Vorzugsweise sind die Drehblockierkörper 54, als Kugeln, ausgebildet, die somit einerseits an den Betätigungskörper 52 und andererseits auch an den Aufnahmen 60 anliegen.

Somit erfolgt nur eine spielbehaftete drehbare Lagerung des Betätigungskörpers 52 relativ zur Schwenkachse 22, die primär dann relevant ist, wenn der Betätigungskörper 52 die Drehblockierkörper 54 in einer Lösestellung hält in welcher die Drehblockierkörper 54 in die Rückzugsaufnahmen 62 des Betätigungskörpers 52 eintauchen.

Um den Betätigungskörper 52 zu veranlassen, sich ohne äußere Einwirkung stets in der Drehrichtung 72 so zu bewegen, wobei sich die Drehblockierkörper 54 in Richtung der Drehblockierstellung bewegen, ist der Betätigungskörper 52 durch eine Drehfeder 114 beaufschlagt (Fig. 6), die einerseits auf den Betätigungskörper 52 wirkt und andererseits radial außenliegend an dem Führungskörper 40 abgestützt ist.

Die Drehfeder 114 bewirkt auch, dass der Betätigungskörper 52 die Drehblockierkörper 54 kraftbeaufschlagt in die Aufnahmen 60 drückt und somit wird der Schwenklagerkörper 14 spielfrei fixiert, wobei die Spielfreiheit auch bei sich aufgrund der Belastungen im Betrieb verändernden Geometrie der Aufnahmen 60 durch ein Weiterdrehen des Betätigungskörpers 52 in der Drehrichtung 72 aufrechterhalten wird.

Die Führungshülse 44 erstreckt sich mit einem eine Aufnahme 102 für den Betätigungskörper 52 bildenden Abschnitt zwischen dem Flansch 42 und einem die Führungshülse 44 abschließenden sich radial zur Schwenkachse 22 hin verlaufenden Flansch 104, welcher vorzugsweise einstückig an die Führungshülse 44 angeformt ist und die Aufnahme 102 für den Betätigungskörper 52 begrenzt, so dass der Betätigungskörper 52 radial zur Schwenkachse 22 durch die Aufnahme 102 der Führungshülse 44 geführt ist und axial in Richtung der Schwenkachse 22 durch Anlage an einer Innenseite 108 des Flansches 104 geführt ist.

Der Flansch 104 weist ferner noch eine zur Schwenkachse 22 koaxiale Aufnahme 106 auf, in welcher ein von einer Schwenkantriebswelle 100 durchsetzter Einsatz 110 eingesetzt, insbesondere eingeschraubt ist, der in der Aufnahme 106 sitzt.

Auf einer dem Flansch 104 gegenüberliegenden Seite der Aufnahme 102 für den Betätigungskörper 52 bildet die Führungshülse 44, beispielsweise mit einem den Flansch 42 durchsetzenden Abschnitt, eine Drehfederaufnahme 112, in welcher im Anschluss an den Betätigungskörper 52 die Drehfeder 114 angeordnet ist, die einerseits mit einem äußeren Ende in der Drehfederaufnahme 112 fixiert ist und mit einem inneren Ende mit einer Antriebshülse 122 verbunden ist, welche drehfest mit dem Betätigungskörper 52 gekoppelt ist.

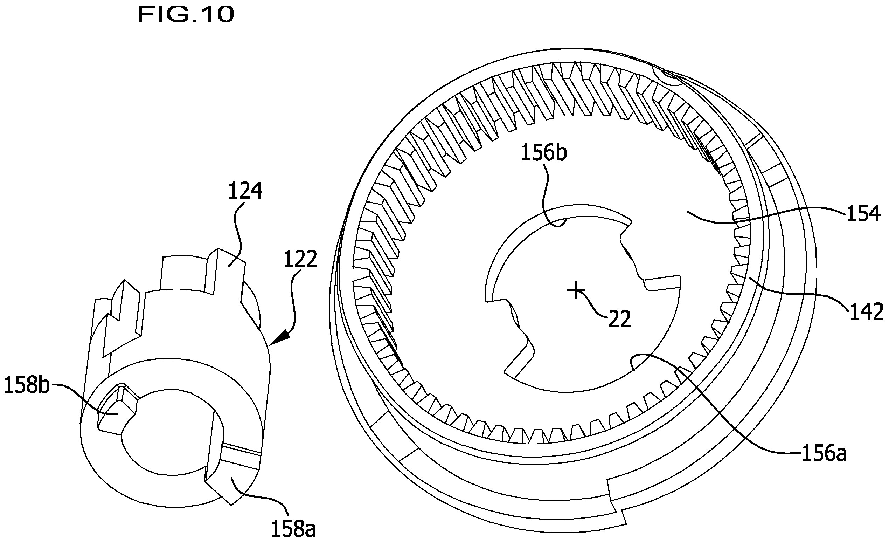

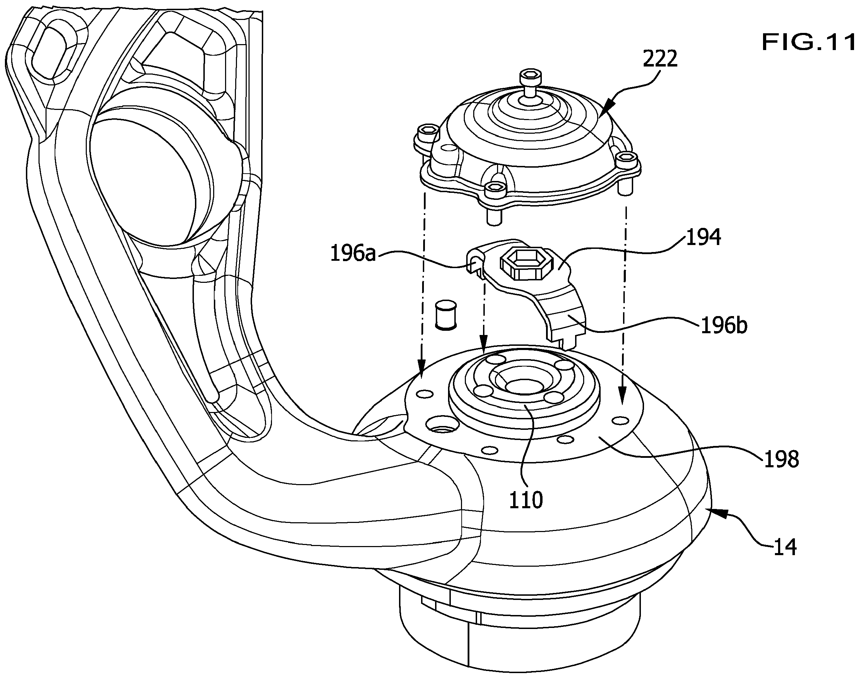

Hierzu ist die Antriebshülse 122, wie in den Fig. 10 und 11 dargestellt, beispielsweise mit Fortsätzen 124 versehen, die zur Herstellung einer Formschlussverbindung in entsprechende Ausnehmungen 126 in den Betätigungskörper 52 eingreifen.

Dadurch, dass die Drehfeder 114 auf die Antriebshülse 122 wirkt, die drehfest mit dem Betätigungskörper 52 gekoppelt ist, erfolgt durch das Einwirken der Drehfeder 114 auf die Antriebshülse 122 ein Antrieb des Betätigungskörpers 52 in der Drehrichtung 72, so dass der Betätigungskörper 52 bei ungehinderter Einwirkung der Drehfeder 114 auf die Antriebshülse 122 den Betätigungskörper 52 stets so beaufschlagt, dass dieser die Tendenz hat die Drehblockierkörper 54 kraftbeaufschlagt in die Aufnahmen 60 zu drücken und somit den Schwenklagerkörper 14 relativ zur Führungshülse 44 drehfest und insbesondere spielfrei zu fixieren.

Um die Drehblockierkörper 54 in die Lösestellung bewegen zu können, ist eine Einwirkung auf den Betätigungskörper 52 entgegengesetzt zur Drehrichtung 72 und auch somit entgegengesetzt zur Wirkung der Drehfeder 114 erforderlich.

Hierzu ist die Antriebshülse 122 mittels eines als Ganzes mit 130 bezeichneten Planetengetriebes 130 antreibbar (Fig. 6), welches in einer Getriebeaufnahme 132 der Führungshülse 44, insbesondere koaxial zur Schwenkachse 22, angeordnet ist, welche beispielsweise teilweise innerhalb des Durchbruchs 27 der Trägerplatte 26 angeordnet ist und vorzugsweise sich auf einer dem Flansch 42 gegenüberliegenden Seite von dem Durchbruch 27 der Trägerplatte 26 weg erstreckt.

Das Planetengetriebe 130 (Fig. 9) umfasst seinerseits ein Hohlrad 142, welches in der Getriebeaufnahme 132 geführt ist und mit einer Innenverzahnung 144 versehen ist, mit welcher Planetenräder 146 mit ihrer Außenverzahnung 148 in Eingriff stehen.

Dabei sind die Planetenräder 146 drehbar an einem Planetenradträger 152 gehalten, der seinerseits drehfest mit der Schwenkantriebswelle 100 verbunden ist, so dass der Planetenradträger 152 einen Abtrieb des Planetengetriebes 130 zum Ausführen des Verschwenkens des Kugelhalses 10 bildet.

Ferner umfasst - wie in Fig. 10 dargestellt - das Hohlrad 142 einen zwischen dem Planetenradträger 152 und der Drehfeder 114 liegenden Flanschkörper 154, welcher sich ebenfalls in Richtung der Schwenkantriebswelle 100 erstreckt, diese umschließt, jedoch relativ zu dieser drehbar ist und einen Abtrieb des Planetengetriebes 130 zum Betätigen der Drehblockiereinrichtung 50 darstellt.

Wie in Fig. 10 dargestellt, weist der Flanschkörper 154 um die Schwenkachse 22 umlaufend angeordnete kreisbogenförmige Antriebsschlitze 156a, 156b auf, welche mit in diese eingreifenden Antriebsfingern 158a, 158b der Antriebshülse 122 zusammenwirken, und welche allerdings so gestaltet sind, dass durch die Differenz zwischen dem Winkelbereich um die Schwenkachse 22, über welchen sich die Antriebsschlitze 156 erstrecken, und dem Winkelbereich um die Schwenkachse 22, über welchen sich die Antriebsfinger 158 erstrecken, ein Freigang der Antriebshülse 122 relativ zum Hohlrad 142 möglich ist, der nachfolgend noch im Einzelnen erläutert wird.

Die Planetenräder 146 sind ferner mit ihrer Außenverzahnung 148 in Eingriff mit einer Außenverzahnung 164 eines Sonnenrades 162 des Planetengetriebes 130, das auf einer als Ganzes mit 166 bezeichneten Antriebswelle sitzt, die koaxial zur Schwenkachse 22 angeordnet ist und beispielsweise mittels eines endseitigen Wellenstummels 168, der in eine stirnseitige Bohrung 172 der Schwenkantriebswelle 100 eingreift, relativ zur Schwenkantriebswelle 100 frei drehbar, jedoch koaxial zu dieser gelagert ist.

Die Antriebswelle 166 trägt im Abstand von dem Planetengetriebe 130 ein Antriebszahnrad 174, beispielsweise ein Kegelzahnrad, welches von einem Abtriebszahnrad einer motorischen Antriebseinheit 182 angetrieben ist, die beispielsweise einerseits einen Antriebsmotor, vorzugsweise einen Elektromotor, und andererseits ein Untersetzungsgetriebe zum Antreiben des Antriebszahnrads umfasst.

Die Antriebseinheit 182 ist beispielsweise an einem Abdeckkörper 184 gehalten, welcher ausgehend von der Trägerplatte 126 die Antriebswelle 166 mit dem Antriebszahnrad 174 sowie das mit diesem kämmende Abtriebszahnrad übergreift und außerdem noch die Antriebswelle 166 auf einer dem Wellenstummel 168 abgewandten Seite lagert.

Somit bilden das Planetengetriebe 130 und die Antriebseinheit 182 beispielsweise unter anderem eine Betätigungseinrichtung 180 für die Drehblockiereinrichtung 50.

Die mit dem Planetenradträger 152 drehfest gekoppelte Schwenkantriebswelle 100 durchsetzt - wie bereits beschrieben - den Flansch 104 des Führungskörpers 40 und ist an einem über den Einsatz 110 überstehenden Ende 192 drehfest mit einem Antriebskörper 194 gekoppelt, welcher zwei Antriebsarme 196a und 196b aufweist, die sich in Richtung eines Endflansches 198 des Schwenklagerkörpers 14 erstrecken, welcher einen außenliegenden Bereich 200 des Flansches 104 des Führungskörpers 14 übergreift, und dabei formschlüssig in Ausnehmungen desselben eingreifen, um zwischen dem Antriebskörper 194 und dem Führungskörper 14 eine drehfeste Verbindung herzustellen.

Der Endflansch 198 übergreift dabei den Flansch 104 des Führungskörpers 40 in dem außenliegenden Bereich 200 und erstreckt sich bis zu einem Führungsansatz 202 des Flansches 104, wobei der Endflansch 198 beispielsweise mit einer radial innen liegenden Zylinderfläche 204 eine äußere Zylinderfläche 206 des Führungsansatzes 202 umgreift und beispielsweise an dieser anliegt und dadurch ebenfalls noch zusätzlich am Führungsansatz 202 koaxial zur Schwenkachse 22 geführt ist.

Darüber hinaus erstreckt sich in der Aufnahme 106 des Führungsansatzes 202 ein Gewinde 212, in welches der Einsatz 110 fixiert, insbesondere eingeschraubt, ist, der mit einem Außenflansch 214 den Endflansch 198 partiell in einem radial innenliegenden Bereich übergreift, so dass der Endflansch 198 des Schwenklagerkörpers 14 axial unverschiebbar zwischen dem Flansch 104 und dem Außenflansch 214 des Einsatzes 110 und somit relativ zum Führungskörper 40 axial unverschiebbar geführt ist.

Auf dem Endflansch 198 ist ferner eine Abdeckung 222 drehfest montiert, welche den Antriebskörper 194 mit den Antriebsarmen 196 übergreift und eine Lageraufnahme 224 für das Ende 192 der Führungswelle 100 bildet, so dass die Abdeckung 222 mit dem Schwenklagerkörper 14 eine Einheit bildet, die um die Schwenkachse 22 drehbar ist (Fig. 11).

Die Abdeckung 222 sitzt dabei auf dem Endflansch 198 auf, und ist auf diesem drehfest fixiert.

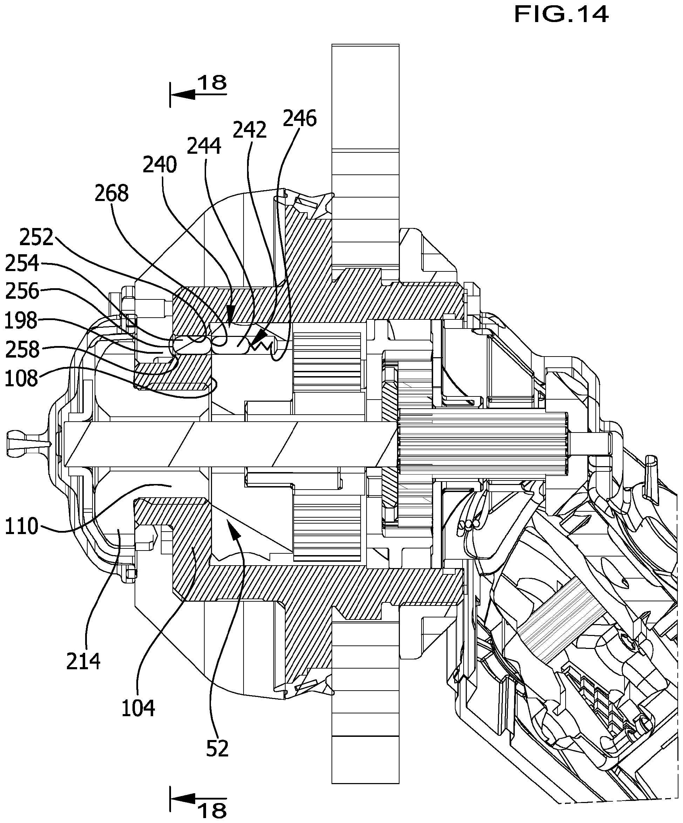

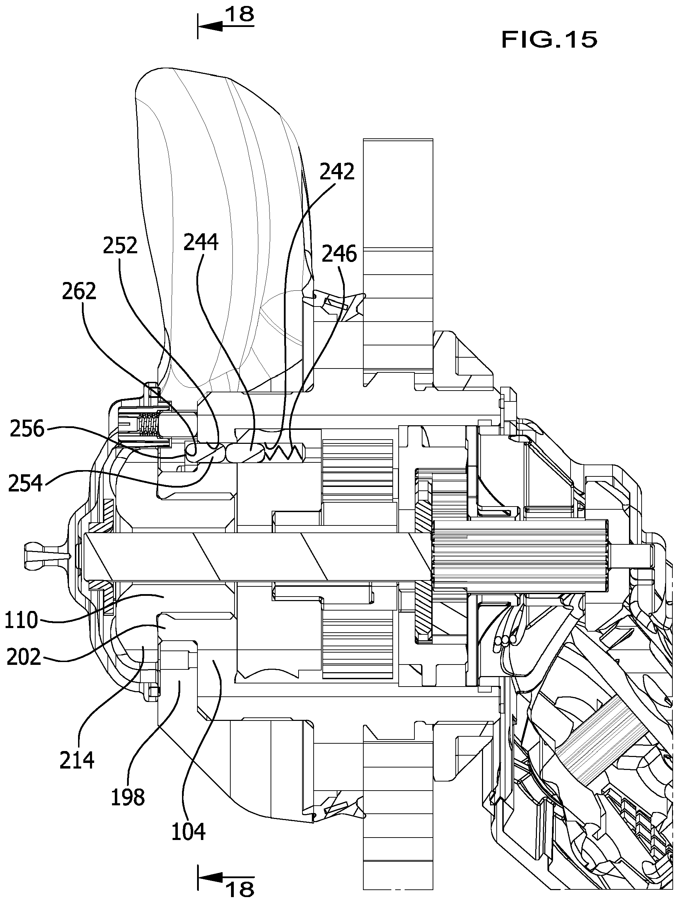

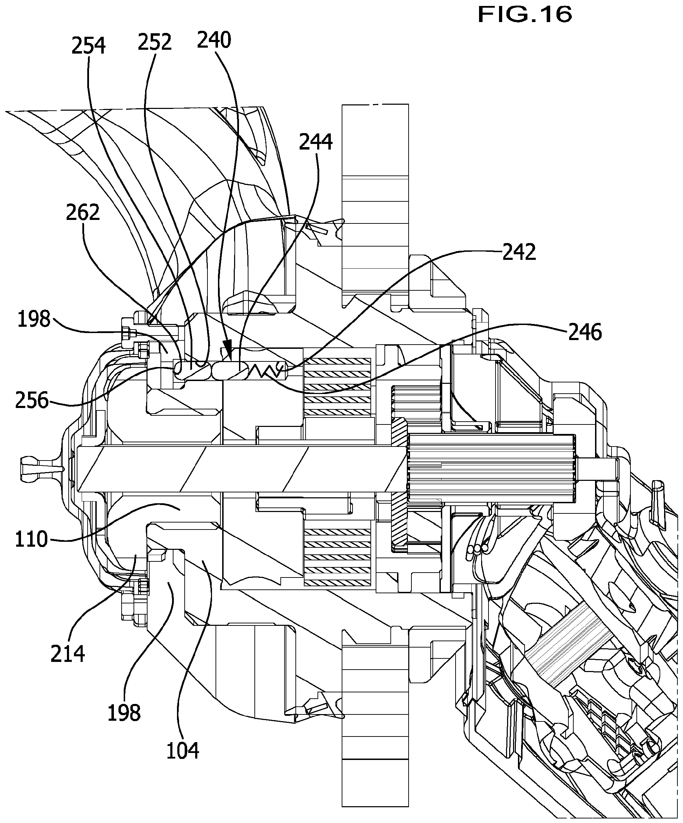

Zur Festlegung des Betätigungskörpers 52 in der Lösestellung ist eine in den Figuren 14 bis 17 dargestellte Lösestellungsrasteinrichtung 240 vorgesehen, welche beispielsweise einen in einer Bohrung 242 in dem Betätigungskörper 52 angeordneten und in einer zur Bohrung 242 parallelen Rastrichtung bewegbaren Rastkörper 244 umfasst, welcher durch eine Federeinheit 246 in Richtung einer Raststellung beaufschlagt ist und welcher somit von einer Rastlösestellung, dargestellt in Fig. 14, in die Raststellung, dargestellt in Fig. 15 und 16, übergehen und in eine als Rastbohrung ausgebildete Rastaufnahme 252 im Flansch 104 eingreifen kann, wenn der Betätigungskörper 52 in der beispielsweise in den Fig. 8 dargestellten Lösestellung steht.

Das heißt, dass die Feder 246 den Rastkörper 244 in Richtung des Flansches 104 beaufschlagt, wobei der Rastkörper 244 so lange keine Rastwirkung entfaltet, als er außerhalb der Rastaufnahme 252 beim Bewegen des Betätigungskörpers 52 an der Innenseite 108 des Flansches 104 entlanggleitet.

Erst wenn die Relativdrehung des Betätigungskörpers 52 zum Flansch 104 soweit fortgeschritten ist, dass dieser in der Lösestellung steht, kann der Rastkörper 244 in die Rastaufnahme 252 eingreifen und somit den Betätigungskörper 52 in der Lösestellung festlegen, so dass dieser trotz Wirkung der Drehfeder 114 sich nicht in die Drehblockierstellung, dargestellt in den Fig. 7, zurückbewegen kann (Fig. 15, 16).

Um den Rastkörper 244 wieder aus seiner in die Rastbohrung 252 eingreifenden Raststellung heraus und in die Rastlösestellung bewegen zu können und somit die Lösestellungsrasteinrichtung 240 zu deaktivieren, ist in der Rastaufnahme 252 ein Tastkörper 254 angeordnet, welcher mit einem Tastkopf 256 eine dem Flansch 104 zugewandte Flanschseite 258 des Endflansches 198 abtastet, wobei die Flanschseite 258 eine beispielsweise als Vertiefung ausgebildete Aktivierungsfläche 262 einer Betätigungskulisse 260 aufweist, mit welcher der Tastkopf 256 des Tastkörpers 254 dann zusammenwirkt, wenn dieser ein Verrasten des Rastkörpers 244 mit der Rastbohrung 252 zulassen soll.

Diese Stellung ist beispielsweise in Fig. 15, 16 und 17 dargestellt.

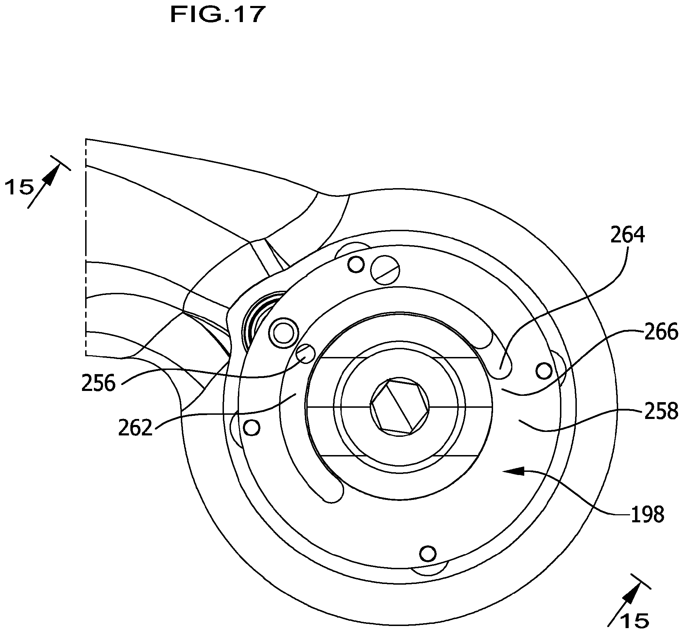

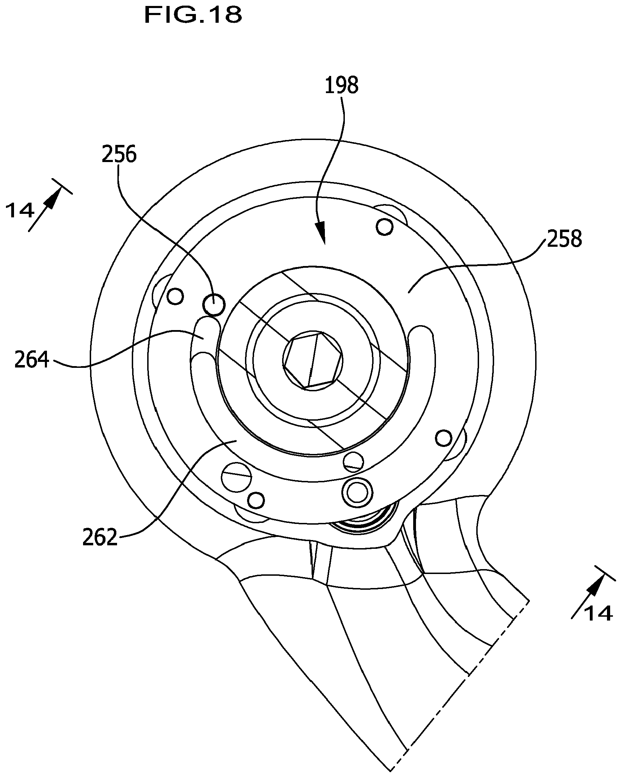

Um jedoch zur Deaktivierung der Lösestellungsrasteinrichtung 240 die Verrastung lösen zu und den Rastkörper 244 von Raststellung in die Rastlösestellung bewegen zu können, und zwar unmittelbar vor Erreichen der Arbeitsstellung oder bei Erreichen der Arbeitsstellung, wie in Fig. 17 und 18 dargestellt, geht die Betätigungskulisse 260 mit einer Rampe 264 beispielsweise in eine gegenüber der Aktivierungsfläche 262 erhöhte Deaktivierungsfläche 266 über, wobei bei einer Drehung des Schwenklagerkörpers 14 und somit auch des Endflansches 198 in Richtung der Arbeitsstellung A die Rampe 264 den Tastkopf 256 des Tastkörpers 254 ausgehend von der Aktivierungsfläche 262 zunehmend in Richtung des Rastkörpers 244 beaufschlagt und somit der Tastkörper 254 zunehmend den Rastkörper 244 aus der Rastaufnahme 252 heraus in Richtung des Betätigungskörpers 252 verschiebt, so dass dann, wenn der Tastkopf 256 die Rastlösefläche 266 erreicht hat, wie in Fig. 14 und 18 dargestellt, der Tastkörper 254 soweit in Richtung des Betätigungskörpers 52 verschoben ist, dass dessen dem Tastkopf 256 gegenüberliegende Endfläche 268 mit der Innenseite 108 des Flansches 104 fluchtet.

Somit ist die Lösestellungsrasteinrichtung 240 des Betätigungskörpers 52 mittels des Rastkörpers 244 bei Erreichen der Arbeitsstellung A deaktiviert, so dass dann der Betätigungskörper 52 aufgrund der Kraftwirkung der Drehfeder 114 sich in die Drehblockierstellung verdreht und damit den Schwenklagerkörper 214 in dieser Stellung relativ zum Führungskörper 40 drehfest festlegt.

Die Lage der den Rastkörper 244 führenden Bohrung 242, sowie der Rastaufnahme 252 und die Lage der Rastlösefläche 266 sind so gewählt, dass unmittelbar vor Erreichen der Arbeitsstellung A der Tastkopf 256 des Tastkörpers 254 die Rastlösefläche 266 erreicht und somit der Tastkörper 254 den Rastkörper 244 aus der Rastaufnahme 252 herausbewegt und dadurch die Verrastung des Betätigungskörpers 52 in der Rastlösestellung unmittelbar vor Erreichen oder spätestens bei Erreichen der Arbeitsstellung löst, so dass dann auch in der Arbeitsstellung A die Drehblockierkörper 54 in die Aufnahmen 60, die in dieser Stellung mit den Führungsaufnahmen 56 fluchtend angeordnet sind, eingreifen und den Schwenklagerkörper 14 drehfest relativ zum Führungskörper 40 festlegen können.

Bei der vorstehend beschriebenen Lösung ist nur ein Satz von Aufnahmen 60 für die drehfeste Festlegung des Schwenklagerkörpers 14 in der Arbeitsstellung A vorgesehen, während in der Ruhestellung Reine Festlegung des Schwenklagerkörpers 14 durch die Drehblockiereinrichtung 50 nicht vorgesehen ist.

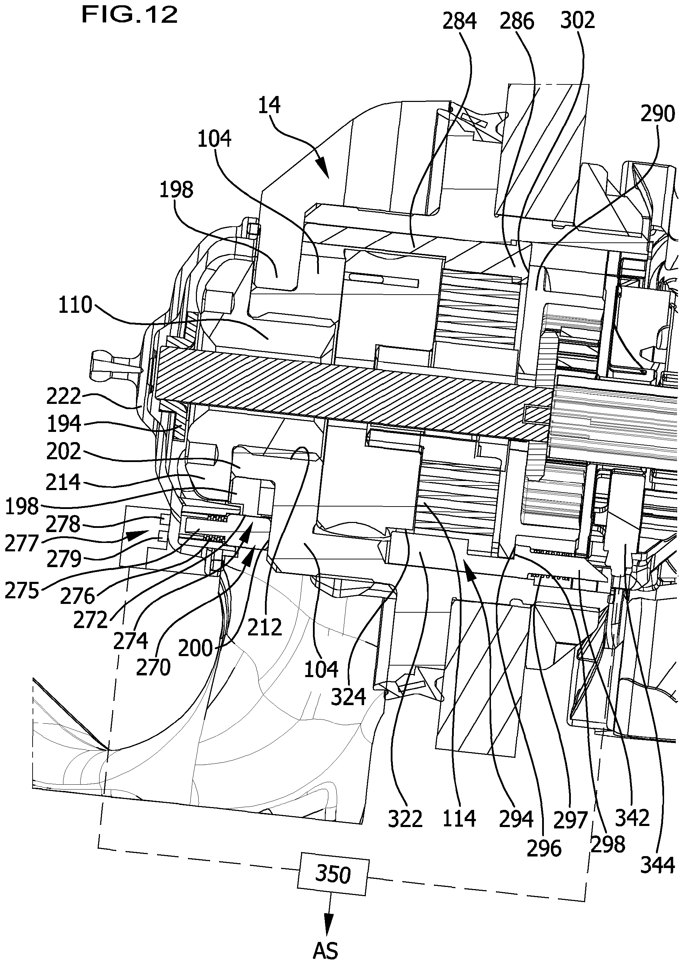

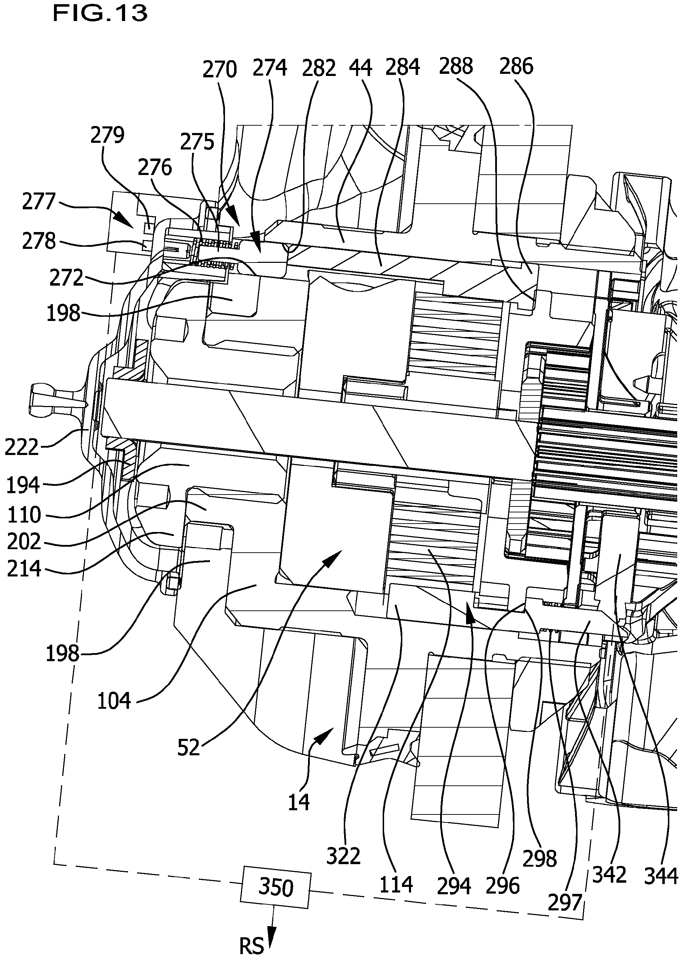

Vielmehr ist zur Festlegung des Schwenklagerkörpers 14 in der Ruhestellung wie in Fig. 12 und 13 dargestellt, eine Ruhestellungsrasteinrichtung 270 vorgesehen, welche einen in dem Endflansch 198 des Schwenklagerkörpers 14 in einer Bohrung 272 vorgesehenen Rastkörper 274 aufweist, welcher durch ein beispielsweise in der Bohrung 272 angeordnetes und ein einen Fortsatz 275 des Rastkörpers 274 umgebendes Federelement 276 in Richtung einer zu der Bohrung 272 parallelen Rastrichtung und in Richtung des Flansches 104 kraftbeaufschlagt ist.

Insbesondere liegt der Rastkörper 274 in allen Drehstellungen des Schwenklagerkörpers 214 bis auf die Ruhestellung R an dem außenliegenden Bereich 200 des Flansches 104 an, welcher den Rastkörper 274 in allen Stellungen des Schwenklagerkörpers 14 in seiner inaktiven Stellung hält.

Der Rastkörper 274 greift vorzugsweise in eine als Rastbohrung ausgebildete Rastaufnahme 282 in dem Flansch 104 nur dann ein, wenn der Schwenklagerkörper 14 in der Ruhestellung steht (Fig. 13), so dass dann der Rastkörper 274 in seiner aktiven Stellung steht.

Das Federelement 276 beaufschlagt den Rastkörper 274 ständig in Richtung der dem Endflansch 198 zugewandten Flanschseite des Flansches 104 und hält diesen somit ständig in einer Rastbereitschaftsstellung, wobei ein Eingreifen des Rastkörpers 274 in die Rastaufnahme 282 und somit ein Übergang von der inaktiven Stellung in die aktive Stellung nur dann möglich ist, wenn der Schwenklagerkörper 14 die der Ruhestellung R entsprechende Drehstellung relativ zum Führungskörper 40 der Schwenklagereinheit 20 erreicht hat.

Zum Erfassen der jeweiligen Stellung des Rastkörpers 274, d.h. der inaktiven Stellung, dargestellt in Fig. 12, und der aktiven Stellung, dargestellt in Fig. 13, ist eine Detektoreinheit 277 an der Abdeckung 222 angeordnet, die die Stellungen des Rastkörpers 274 durch einen Magnetfeldsensor 278 erfasst.

Vorzugsweise ist der Magnetfeldsensor 278 auf einer der Bohrung 272 gegenüberliegenden Seite der Abdeckung 222 angeordnet und reagiert auf Veränderungen eines die Abdeckung 222 durchdringenden Magnetfeldes eines stationär in der Detektoreinheit 277 und nahe des Magnetfeldsensors 278 angeordneten Magneten 279, insbesondere eines Permanentmagneten, die durch den magnetisierbaren Rastkörper 274 und insbesondere auch dessen magnetisierbaren Fortsatz 275, erfolgen, wenn diese sich von der inaktiven Stellung in die aktive Stellung, und umgekehrt, bewegen.

Dadurch, dass die Detektoreinheit 277 an der Abdeckung 222 angeordnet und an dieser gehalten ist, wird diese - in gleicher Weise wie die Abdeckung 222 - bei einem Schwenken des Schwenklagerkörpers 14 von der Arbeitsstellung in die Ruhestellung - und umgekehrt - mitverschwenkt.

Zum Deaktivieren der Ruhestellungsrasteinrichtung 270, das heißt zum Aufheben der Raststellung des Rastkörpers 274, ist in Fortsetzung der Rastaufnahme 282 in der Führungshülse 44 ein Betätigungsstift 284 vorgesehen, welcher mit einem Tastkopf 286 eine an dem Hohlrad 142 vorgesehene Kulissenbahn 288 abtastet, die an einem radial außenliegend zur Innenverzahnung 144 an dem Hohlrad 142 umlaufenden Kulissenflansch 290 angeordnet ist und somit eine Deaktivierungseinheit 280 bildet.

Außerdem trägt der Kulissenflansch 290 des Hohlrads 142 nicht nur die Kulissenbahn 288 zur Betätigung des Betätigungsstifts 284 sondern zusätzlich eine Sicherungskulissenbahn 298 zur Betätigung eines Sicherungsstifts 294, welcher die Sicherungskulissenbahn 298 mittels einer Abtastfläche 296 abtastet und ist dabei durch eine Feder 297 in Richtung einer Drehblockierstellung beaufschlagt, wie in den Fig. 12 und 13 dargestellt.

Der Sicherungsstift 294 weist hierzu einen Sicherungskörper 322 auf, welcher zur Sicherung der Drehstellung des Betätigungskörpers 52 in der Drehblockierstellung in eine Sicherungsausnehmung 324 im Betätigungskörper 52 eingreift, die derart gestaltet ist, dass der Betätigungskörper 52 nicht in der Lage ist, die Drehblockierstellung zu verlassen und somit die Drehblockierstellung in der Arbeitsstellung, das heißt somit auch die Verriegelung des Schwenklagerkörpers 214 in der Arbeitsstellung, gesichert ist.

Der durch die Sicherungskulissenbahn 298 bewegbare Sicherungsstift 294 bildet zusammen mit dem Sicherungskörper 322 und der Sicherungsausnehmung 324 eine Sicherungseinrichtung 330.

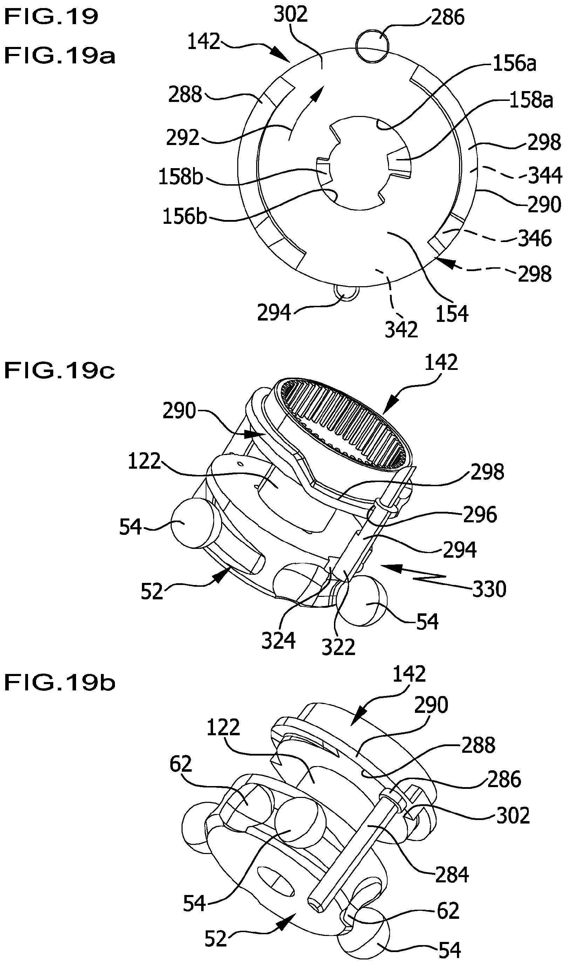

Die Sicherungskulissenbahn 298 ist, wie in den Fig. 19 bis 25 dargestellt, vorzugsweise gegenüberliegend zur Kulissenbahn 288 an dem Kulissenflansch 290 angeordnet und derart geformt, dass diese den Sicherungsstift 294 ausgehend von seiner Sicherungsstellung, in welcher der Sicherungskörper 322 in die Sicherungsausnehmung 324 eingreift, bereits nach der anfänglichen Drehung des Hohlrades 142, ausgehend von der Ausgangsstellung in der Drehrichtung 292, soweit verschiebt, dass der Sicherungskörper 322 aus der Sicherungsausnehmung 324 des Betätigungskörpers 52 heraustritt, um die nachfolgende Drehbewegung des Betätigungskörpers 52 freizugeben.

Die Sicherungskulissenbahn 298 ist hierzu mit einem eine Sicherung der Drehblockierstellung des Betätigungskörpers 52 erlaubenden sichernden Bereich 332 und eine Entsicherung der Bewegung des Drehblockierkörpers 52 bewirkenden entsichernden Bereich 334 versehen, die durch einen Übergangsbereich 336 miteinander verbunden sind.

Darüber hinaus ist der Sicherungsstift 294 noch mit einem Fortsatz 342 versehen, welcher je nach Position des Sicherungsstifts 294 einen Detektor 344 betätigt oder nicht betätigt, wobei beispielsweise der als Taster ausgebildete Detektor 344 so angeordnet ist, dass dieser in der die Drehblockierstellung sichernden Stellung des Sicherungsstifts 294 nicht betätigt ist und in der entsicherten, das heißt eine Bewegung des Betätigungskörpers 52 aus der Drehblockierstellung heraus freigebenden Stellung, betätigbar ist, wie sich aus Fig. 12 und 13 ergibt.

Sowohl die Detektoreinheit 277 als auch der Detektor 344 sind mit einer Zustandsauswerteeinheit 350, beispielsweise über nicht in Fig. 12 und 13 dargestellte Leitungen, verbunden, welche die Verrastung in der Ruhestellung R und die Sicherung der Drehblockierstellung in der Arbeitsstellung A für Sicherheitssysteme eines Fahrzeugs eindeutig anzeigt.

Erfasst die Detektoreinheit 277 den Rastkörper 274 in seiner aktiven Stellung, gemäß Fig. 13, in welcher er in die Rastaufnahme 282 eingreift, so wird von der Zustandsauswerteeinheit 350 ein Signal RS nur dann ausgegeben, wenn der Detektor 344 gleichzeitig anzeigt, dass der Sicherungsstift 294 in der die Drehblockierstellung freigebenden Stellung steht, d.h. der Detektor 344 betätigt ist (Fig. 12).

Ist der Detektor 344 nicht durch den Sicherungsstift 294 betätigt, und somit durch diesen die Drehblockerstellung durch den Sicherungsstift 294 gesichert, so gibt die Zustandsauswerteeinheit 350 ein Signal AS, das eindeutig die gesicherte Drehblockierstellung in der Arbeitsstellung A anzeigt, nur dann aus, wenn der Rastkörper 274 in seiner inaktiven, auf dem Bereich 200 des Flansches 104 gleitenden Stellung steht und diese gleichzeitig von der Detektoreinheit 277 erfasst wird (Fig. 13).

Somit ist bei der erfindungsgemäßen Lösung mittels der Zustandsauswerteeinheit 350 stets eine eindeutige Anzeige der sicheren Blockierung der Schwenklagereinheit 14 sowohl in der Ruhestellung R als auch der Arbeitsstellung A möglich.

Die Fig. 19 bis 25 zeigen das Zusammenwirken der Drehbewegung des Hohlrades 142 ausgehend von einer in der Arbeitsstellung vorliegenden Ruhestellung bei Drehung in einer Drehrichtung 292 mit der Antriebshülse 122 zum Antreiben des Betätigungskörpers 52 mittels der Antriebsschlitze 156a und 156b, die in dem Flanschkörper 154 des Hohlrades 142 angeordnet sind, mit den in diese Antriebsschlitze 156a, 156b eingreifenden Antriebsfingern 158a, 158b sowie mit dem Tastkopf 286 des Betätigungsstifts 284 der Deaktivierungseinheit 280 und einem Sicherungsstift 294 der Sicherungseinrichtung 330, der mit einer ebenfalls von dem Kulissenflansch 290 gebildeten Kulissenbahn 298 zusammenwirkt und diese Kulissenbahn 298 mittels der Abtastfläche 296 abtastet wie nachfolgend noch im Detail erläutert.

In der in Fig. 19 dargestellten Ausgangsstellung steht der Tastkopf 286 auf einem Bahnabschnitt 302 der Kulissenbahn 288, wodurch der Betätigungsstift 284, wie in Fig. 12 dargestellt, in einer Stellung steht, in welcher dieser ein Lösen des Rastkörpers 274 der Ruhestellungsrasteinrichtung 270 bewirken würde, sofern der Schwenklagerkörper 14 in der Ruhestellung stehen würde. Da der Schwenklagerkörper 14 jedoch gemäß Fig. 19 in der Arbeitsstellung steht, ist der Betätigungsstift 284 wirkungslos.

Ferner steht der Sicherungsstift 294 geführt durch die Sicherungskulissenbahn 298 in seiner Sicherungsstellung, in welcher dieser die Drehblockierstellung des Betätigungskörpers 52 sichert.

Erfolgt nun ein Antreiben des Hohlrades 142 mittels des Planetengetriebes 130, so dreht sich das Hohlrad 142 in der Drehrichtung 292 und der Tastkopf 286 bewegt sich auf einem Bereich 304 der Kulissenbahn 288 welcher gegenüber dem Bereich 302 in Richtung parallel zur Schwenkachse zurückgesetzt ist, so dass dieser ein Bewegen des Betätigungsstiftes 284 erlaubt sofern dieser von dem Rastkörper 274 beaufschlagt wird, wobei dies jedoch nicht der Fall ist, so dass der Betätigungsstift 284 auch in der Stellung verharren kann, die durch den Bereich 302 der Kulissenbahn 288 vorgegeben wurde.

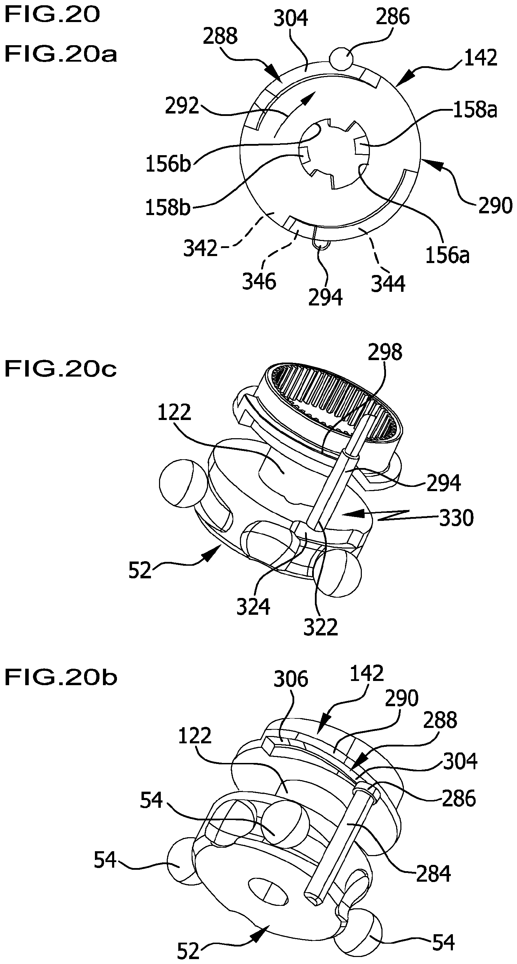

Wie ferner in Fig. 20a erkennbar, erfolgt die Drehung des Hohlrades 142 mit dem Kulissenflansch 290 ohne dass ein Antrieb der Antriebshülse 122 erfolgt, da die Antriebsschlitze 156a, 156b eine derartige Relativdrehung des Hohlrades relativ zu den Antriebsfingern 158a, 158b erlauben, ohne diese mitzudrehen.

Außerdem bewirkt die Drehung des Hohlrades 142, dass die Sicherungskulissenbahn 298 auf den Sicherungsstift 294 derart einwirkt, dass dieser von der Sicherungsstellung ausgehend in die entsichernde Stellung bewegt wird und dabei der Sicherungskörper 322 aus der Sicherungsausnehmung 324 des Betätigungskörpers 52 austritt, um eine Drehbewegung des Betätigungskörpers 52 zuzulassen (Fig. 20b).

Diese entsichernde Stellung wird durch die Sicherungskulissenbahn 298 so lange aufrechterhalten, bis der Schwenklagerkörper 14 wieder in der Arbeitsstellung steht.

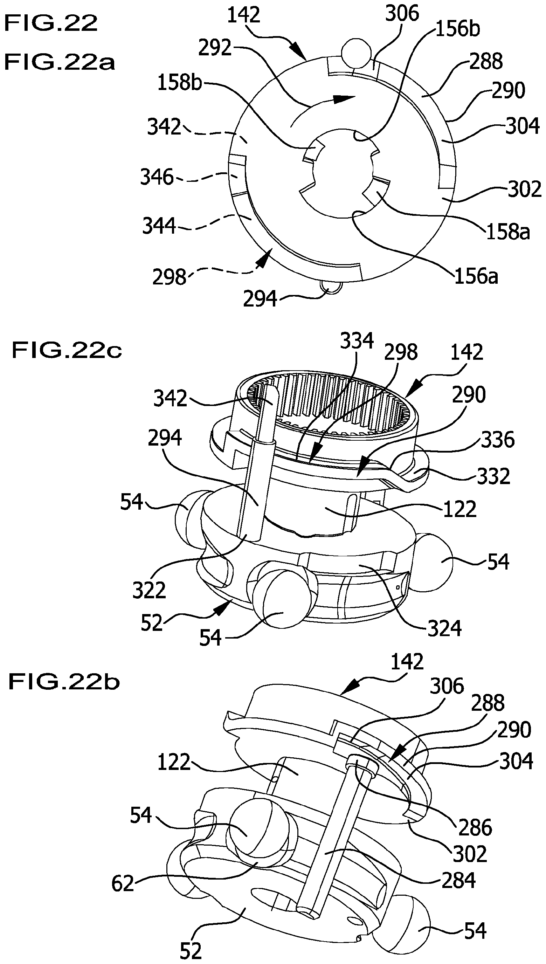

Das Hohlrad 142 kann dabei noch weiter gedreht werden, so lange, bis die Antriebsschlitze 156a, 156b an den Antriebsfingern 158a, 158b in der Drehrichtung 292 anliegen, wobei sich der Tastkopf 286 des Betätigungsstifts 284 weiter relativ zur Kulissenbahn 288 über den Bereich 304 derselben bewegt und der Bereich 304 zunehmend relativ zum Bereich 302 zurückgesetzt verläuft. Die Mitnahme der Antriebshülse 122 durch Mitdrehen der Antriebsfinger 158a, 158b um die Schwenkachse führt nun dazu, dass zusätzlich auch noch eine Drehung des Betätigungskörpers 52 erfolgt, und zwar, wie in Fig. 22 dargestellt, soweit, bis die Drehblockierkörper 54 in die diesen zugeordneten Rückzugsaufnahmen 62 eintauchen können und somit die Lösestellung erreichen, in welcher diese in den Rückzugsaufnahmen 62 liegen, so dass nunmehr die Drehblockiereinrichtung 50 in ihrer Lösestellung steht und eine Drehbewegung des Schwenklagerkörpers 14 freigibt, so dass dieser aus der Arbeitsstellung herausschwenken kann.

Sobald der Betätigungskörper 52 die Lösestellung der Drehblockiereinrichtung 50 erreicht hat, erfolgt ein Festlegen des Betätigungskörpers 52 in seiner Lösestellung mittels der Lösestellungsrasteinrichtung 240 in der beschriebenen Art und Weise.

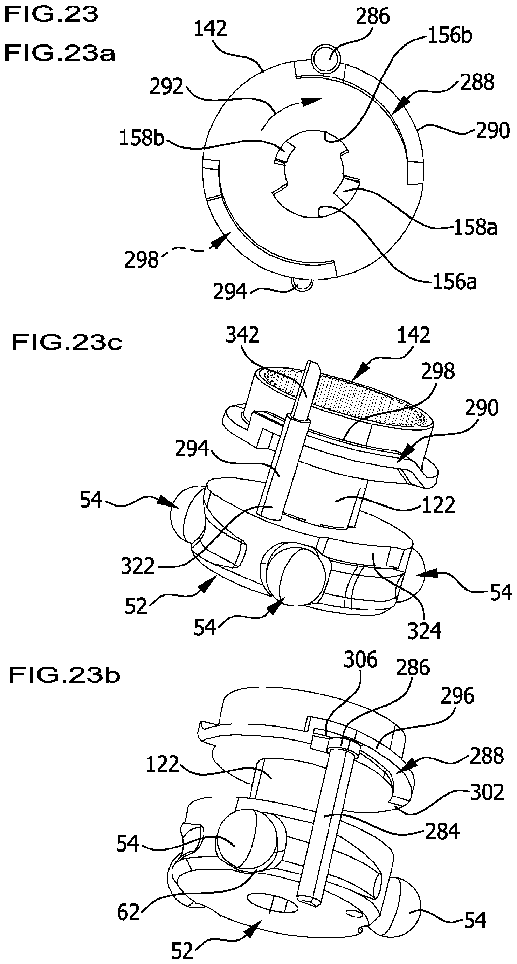

Durch diese Festlegung des Betätigungskörpers 52 in der Lösestellung durch die Lösestellungsrasteinrichtung 240 ist auch die Drehstellung der Antriebshülse 122 und somit auch deren Antriebsfinger 158a und 158b in der der Lösestellung des Betätigungskörpers 52 entsprechenden Drehstellung festgelegt, die gemäß Fig. 23 ebenfalls der Drehstellung des Hohlrades 142 entspricht.

In dieser Drehstellung des Hohlrades 142 hat der Betätigungsstift 284 die Möglichkeit, sich so weit zu bewegen, dass der Rastkörper 274 der Ruhestellungsrasteinrichtung 270 in die Rastaufnahme 282 eintauchen und den Schwenklagerkörper 14 in der Ruhestellung fixieren kann. Dies erfolgt jedoch erst, wenn, wie in Fig. 13 dargestellt, der Schwenklagerkörper 214 die Ruhestellung erreicht hat.

Diese Stellung ist in Fig. 23 dargestellt, und wird erreicht durch ausgehend von der Stellung gemäß Fig. 22 erfolgendes weiterdrehen des Hohlrads 142 in der Drehrichtung 292.

In dieser Stellung erfolgt eine Beaufschlagung des Betätigungsstifts 284 durch den Rastkörper 274, so dass der Tastkopf 286 so weit bewegt wird, bis dieser an dem Bereich 306 der Kulissenbahn 288 anliegt, wobei dadurch der Betätigungsstift 284 das Eingreifen des Rastkörpers 274 in die Rastaufnahme 282 erlaubt.

Nach Erreichen der Ruhestellung des Schwenklagerkörpers 14 erfolgt auch ein Abschalten des Antriebs für das Planetengetriebe 130, so dass das Hohlrad 142 in der in Fig. 23 dargestellten Stellung verbleibt, und somit auch der Betätigungsstift 284 durch Auflegen des Tastkopfes 286 auf dem Bereich 306 der Kulissenbahn 288 die Ruhestellung des Schwenklagerkörpers 214 aufrecht erhält, dadurch dass der Rastkörper 274 in der Rastaufnahme durch die Einwirkung des Federelements 276 verbleibt, ohne dass der Betätigungsstift 284 entgegenwirkt.

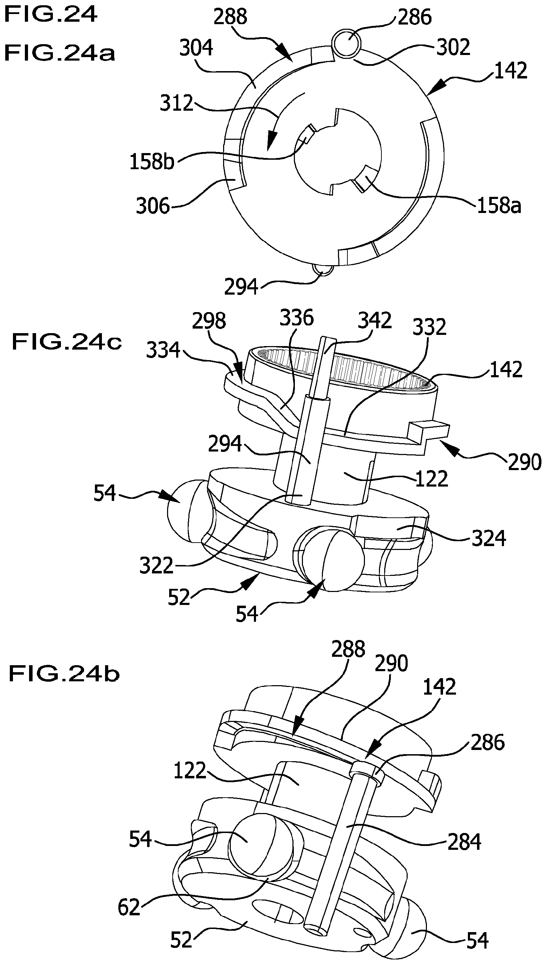

Soll nun wieder ein Übergang des Schwenklagerkörpers 214 von der Ruhestellung in die Arbeitsstellung erfolgen, so erfolgt wiederum ein Antreiben des Planetengetriebes 130, allerdings nunmehr in umgekehrter Richtung, so dass sich auch das Hohlrad 142 in umgekehrter Drehrichtung, in diesem Fall in Drehrichtung 312, dreht (Fig. 24).

Dadurch bewegt sich die Kulissenbahn 288 relativ zu dem Tastkopf 286 des Betätigungsstifts 284 längs der Kulissenbahn 288 in den Bereich 302, was dazu führt, dass durch den ausgehend von dem Bereich 306 ansteigenden Bereich 304 ein Verschieben des Betätigungsstiftes 284 in Richtung des Endflansches 198 und somit ein Herausschieben des Rastkörpers 274 aus der Rastaufnahme 282 erfolgt, so dass dadurch die Ruhestellungsrasteinrichtung 270 in ihre gelöste Stellung übergeht und somit die Verrastung des Schwenklagerkörpers 214 in der Ruhestellung nicht mehr vorliegt.

Dabei ist jedoch nach wie vor der Betätigungskörper 52 der Drehblockiereinrichtung 50 in seiner Lösestellung durch die Lösestellungsrasteinrichtung 240 fixiert, wobei ein Lösen der Blockierung des Drehblockierkörpers 52 in der Lösestellung in Abhängigkeit von der Drehstellung des Schwenklagerkörpers 14 erfolgt, welche von der Relativdrehung der Betätigungskulisse 262 relativ zu dem drehfest in dem Flansch 104 angeordneten Tastkörper 254 mit dem Tastkopf 256 abhängt wie in Fig. 18 dargestellt.

Beispielsweise ist die Betätigungskulisse 262 so ausgebildet, dass diese mittels des Tastkörpers 254 in einer zwischen der Ruhestellung und vor Erreichen der Arbeitsstellung liegenden Drehstellung, vorzugsweise in einem kleinen Winkelbereich vor der Arbeitsstellung liegenden Drehstellung lösend einwirkt.

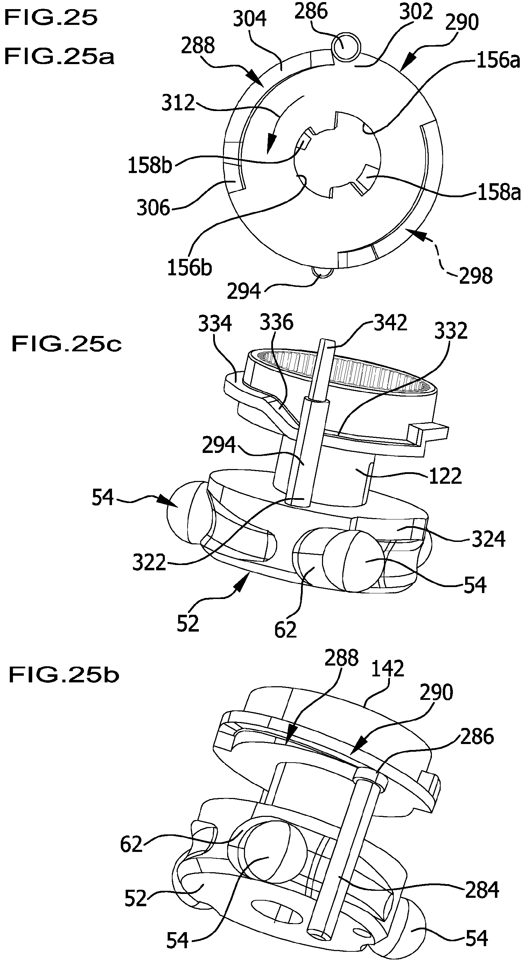

Nach dem Lösen der Lösestellungsrasteinrichtung 240 erfolgt eine Drehbewegung des Betätigungskörpers 52 durch Einwirkung der Drehfeder 114, so dass der Betätigungskörper 52 sich mit der Antriebshülse 122 in der Drehrichtung 312 ebenfalls zu drehen beginnt und sich relativ zum Hohlrad 142 aufgrund der Bewegbarkeit der Antriebsfinger 158 relativ zu den Antriebsschlitzen 156 dreht, was in Fig. 25 dargestellt ist, so dass die Antriebsfinger 158a, 158b sich relativ zu den Antriebsschlitzen 156a und 156b in der Drehrichtung 312 zu bewegen beginnen, um dann wiederum in der Arbeitsstellung die in Fig. 19 dargestellte Drehstellung zu erreichen.

Die erfindungsgemäße Anhängekupplung funktioniert nun folgendermaßen.

Ausgehend von der Arbeitsstellung, dargestellt in den Fig. 1, 2, 3 und 6 sowie 7, in welcher der Schwenklagerkörper 14 relativ zum Führungskörper 40 in Bezug auf eine Drehbewegung um die Schwenkachse 22 durch die Drehblockiereinrichtung drehblockiert ist, nämlich dadurch, dass der Betätigungskörper 52 die Drehblockierkörper 54 in der Führungsrichtung 58 radial so weit von der Schwenkachse 22 weg nach außen bewegt hat, dass diese in die Aufnahmen 60 eingreifen und dadurch den Schwenklagerkörper 14 relativ zum Führungskörper 40 drehblockiert fixieren, bewirkt ein Einschalten der Antriebseinheit, dass mit dem Abtriebszahnrad das Antriebszahnrad 174 derart angetrieben wird, dass die Antriebswelle 166 das Sonnenrad 162 antreibt.

Dieses treibt wiederum die Planetenräder 146 an, wobei dadurch, dass der Schwenklagerkörper 14 hinsichtlich einer Drehbewegung um die Schwenkachse 22 durch die Drehblockiereinrichtung 50 blockiert ist, der Planetenradträger 152 ebenfalls blockiert ist, so dass sich die Antriebsarme 196 des Antriebskörpers 194 relativ zu den Anlagekörpern 226 und 228 nicht verdrehen können, und folglich auch eine Drehbewegung der Führungswelle 100, mit welcher der Planetenradträger 152 drehfest verbunden ist, nicht erfolgen kann.

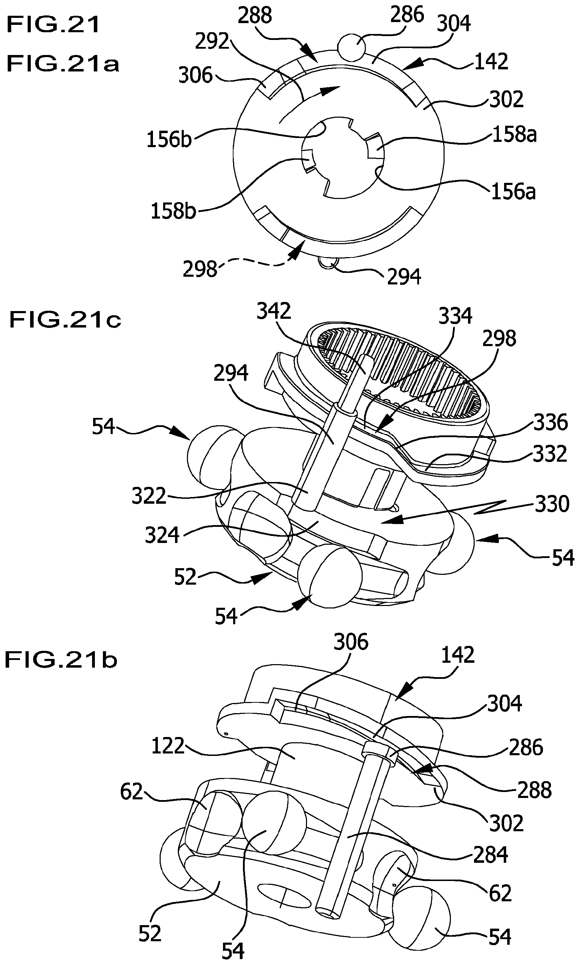

Dadurch erfolgt ein Antrieb des Hohlrades 142 dergestalt, dass dieses sich gemäß Fig. 19 in der Drehrichtung 292 verdreht. Zunächst bewirkt diese Drehung des Hohlrades 142 eine Betätigung der Sicherungseinrichtung 320, wobei durch Verschieben des Sicherungsstifts 294 der Sicherungskörper 322 die Sicherungsausnehmung 324 des Betätigungskörpers 52 verlässt und von der Sicherungsstellung in die Entsicherungsstellung übergeht(Fig. 20). Ein Weiterdrehen des Hohlrads führt dazu, dass die Kulissenbahn 288 nicht mehr auf den Tastkopf 286 wirkt und somit eine Bewegung derselben in Richtung weg von dem Flansch 104 zulässt, wie in Fig. 20 und Fig. 21 dargestellt, so dass die Ruhestellungsrasteinrichtung 270 aktiviert wird, ohne dass bereits eine Drehung des Betätigungskörper 52 der Drehblockiereinrichtung 50 erfolgt.

Anschließend erfolgt dann, wie in Fig. 22 bis 23 dargestellt, über die Antriebsschlitze 156 und die Antriebsfinger 158 ein Verdrehen der Antriebshülse 122, die über die Fortsätze 124 mit dem Betätigungskörper 52 drehfest verbunden ist.

Dadurch wird durch das Hohlrad 142 der Betätigungskörper 52 aus der Drehblockierstellung heraus in Richtung seiner Lösestellung verdreht, und zwar so weit bis die Lösestellung erreicht ist und die Lösestellungsrasteinrichtung 240 des Betätigungskörpers 52 wirksam wird und diesen in der Lösestellung relativ zum Führungskörper 40 in der beschriebenen Art und Weise verrastet, wie dies in Fig. 15 und 16 dargestellt ist.

Da bei Erreichen der Lösestellung nunmehr eine Drehbewegung des Schwenklagerkörpers 14 möglich ist und außerdem die Drehbewegung des Betätigungskörpers 52 entgegengesetzt zur Drehrichtung 72 durch die Lösestellungsrasteinrichtung 240 blockiert ist, bleibt das Hohlrad 142 des Planetengetriebes 130 stehen, während sich nunmehr der Planetenradträger 146 dreht, der über die Schwenkantriebswelle 100 und den Antriebskörper 194 mit den Antriebsarmen 196 in der Lage ist, den Schwenklagerkörper 14 um die Schwenkachse 22 in Richtung der Ruhestellung R zu verschwenken.

Bei Erreichen der Ruhestellung R wird die Ruhestellungsrastvorrichtung 270 aktiv, nämlich dadurch, dass der Rastkörper 274 in der Lage ist, in die Rastbohrung 282 einzugreifen und den Tastkörper 254 mit dem Betätigungsstift 294 in Richtung der Kulissenbahn 288 zu verschieben.

Damit erfolgt eine Verrastung des Schwenklagerkörpers 14 in der der Ruhestellung R des Kugelhalses 10 entsprechenden Drehstellung durch die Ruhestellungsrastvorrichtung 270.

In dieser Ruhestellung erfolgt nun ein Abschalten der Antriebseinheit.

Soll nun ein Zurückschwenken des Kugelhalses 10 von der Ruhestellung R in die Arbeitsstellung A erfolgen, so wird die Antriebseinheit mit umgekehrter Drehrichtung betrieben.

Da ein Verschwenken des Schwenklagerkörpers 214 aufgrund der aktiven Ruhestellungsrasteinrichtung 270 nicht möglich ist treibt das Planetengetriebe 130 das Hohlrad 142 in der Drehrichtung 312 an, welches, wie in Fig. 24 dargestellt mit der Kulissenbahn 288 auf den Betätigungsstift 294 einwirkt, so dass dieser die Ruhestellungsrasteinrichtung 270 deaktiviert.

Da eine Verdrehung des Betätigungskörpers 52 aufgrund der wirksamen Lösestellungsrasteinrichtung nicht möglich ist, bewirkt das Planetengetriebe 130 eine Drehbewegung des Planetenradträgers 152 der über die Schwenkantriebswelle 100 den Antriebskörper 194 mit den Antriebsarmen 196 antreibt und ein Verschwenken des Schwenklagerkörpers 14 mit Verschwenken des Kugelhalses 10 in Richtung der Arbeitsstellung A erfolgt.

Unmittelbar vor Erreichen der Arbeitsstellung A erfolgt in der beschriebenen Art und Weise, wie beispielsweise in Fig. 18 dargestellt, ein Deaktivieren der Lösestellungsrasteinrichtung 240, d.h. ein Übergang derselben von der Raststellung in die Rastlösestellung, und somit die Freigabe des Betätigungskörpers 52 zur Bewegung in der Drehrichtung 72 unter Einwirkung der Drehfeder 114 in Richtung der Drehblockierstellung, wobei die Drehblockierkörper 54 durch den Betätigungskörper 52 radial zur Schwenkachse 22 nach außen in die Aufnahmen 60 gedrückt werden und somit wiederum zu einer Drehblockierung des Schwenklagerkörpers 14 relativ zum Führungskörper 40 führen.

In dieser verriegelten Stellung des Schwenklagerkörpers 14 relativ zum Führungskörpers 40 ist wiederum eine Drehbewegung des Planetenradträgers 152 blockiert, so dass das Hohlrad 142 weitergedreht wird, und zwar in die in Fig. 19 dargestellte Ausgangsstellung, in welcher der Betätigungskörper 52 eine weitere Drehbewegung in der Drehrichtung 72 unter Einwirkung der Drehfeder 114 ausführen kann, so dass das Hohlrad 142 in der Arbeitsstellung A ein Nachstellen durch weiterdrehen des Betätigungskörpers 52 in der Drehrichtung 72 unter Einwirkung der Drehfeder 114 nicht behindert.

## Patentansprüche

1. Anhängekupplung, umfassend einen zwischen einer Arbeitsstellung (A) und einer Ruhestellung (R) bewegbaren Kugelhals (10) mit einem an einem ersten Ende (12) angeordneten Schwenklagerkörper (14) und einer an einem zweiten Ende (16) angeordneten Kupplungskugel (18), eine fahrzeugfest angeordnete Schwenklagereinheit (20), mittels welcher der Schwenklagerkörper (14) um eine Schwenkachse (22) zwischen der Arbeitsstellung (A) und der Ruhestellung (R) verschwenkbar aufgenommen ist, eine Drehblockiereinrichtung (50), welche in der Arbeitsstellung in einer Drehblockierstellung eine Schwenkbewegung des Schwenklagerkörpers (14) um die Schwenkachse (22) blockiert und in einer Lösestellung die Schwenkbewegung des Schwenklagerkörpers (14) freigibt, sowie eine Ruhestellungsrasteinrichtung (270) welche in einer inaktiven Stellung eine Bewegung des Schwenklagerkörpers (14) relativ zur Schwenklagereinheit (20) zulässt und in einer Raststellung den Schwenklagerkörper (14) relativ zu der Schwenklagereinheit (20) in der Ruhestellung drehfest festlegt,
**dadurch gekenzeichnet,** dass der Ruhestellungsrasteinrichtung (270) eine Detektoreinheit (277) zugeordnet ist, welche mindestens eine aktive Stellung der Ruhestellungsrasteinrichtung (270) erfasst.

2. Anhängekupplung nach Anspruch 1, **dadurch gekennzeichnet, dass** die Detektoreinheit (277) auch eine inaktive Stellung der Ruhestellungsrasteinrichtung (270) erfasst.

3. Anhängekupplung nach Anspruch 1 oder 2, **dadurch gekennzeichnet, dass** die Detektoreinheit (277) die mindestens eine Stellung der Ruhestellungsrasteinrichtung (270) berührungslos erfasst.

4. Anhängekupplung nach einem der voranstehenden Ansprüche, **dadurch gekennzeichnet, dass** die Detektoreinheit (277) die mindestens eine Stellung der Ruhestellungsrasteinrichtung (270) durch ein durch die mindestens eine Stellung der Ruhestellungsrasteinrichtung (270) beeinflusstes Magnetfeld erfasst, dass insbesondere die Detektoreinheit (277) einen Magnetfeldsensor (278) aufweist, dass insbesondere der Magnetfeldsensor (278) ein Magnetfeld eines durch die Bewegung der Ruhestellungsrasteinrichtung (270) bewegbaren Magneten erfasst oder, dass insbesondere der Magnetfeldsensor (278) ein Magnetfeld eines diesem stationär zugeordneten und durch die Stellungen der Ruhestellungsrasteinrichtung (270) beeinflussten Magneten (289) erfasst.

5. Anhängekupplung nach einem der voranstehenden Ansprüche, **dadurch gekennzeichnet, dass** die Detektoreinheit (277) mindestens die aktive Stellung der Ruhestellungsrasteinrichtung (270) durch eine die Ruhestellungsrasteinrichtung (270) übergreifende Abdeckung der Schwenklagereinheit (20) hindurch erfasst.

6. Anhängekupplung nach einem der voranstehenden Ansprüche, **dadurch gekennzeichnet, dass** die Ruhestellungsrasteinrichtung (270) von der Drehblockiereinrichtung (50) unabhängig ist.

7. Anhängekupplung nach einem der voranstehenden Ansprüche, **dadurch gekennzeichnet, dass** die Ruhestellungsrasteinrichtung (270) bei Erreichen der der Ruhestellung (R) entsprechenden Schwenkstellung des Schwenklagerkörpers (14) aufgrund eines in dieser vorgesehenen Federelements (276) selbsttätig in die aktive Stellung übergeht.

8. Anhängekupplung nach einem der voranstehenden Ansprüche, **dadurch gekennzeichnet, dass** die Ruhestellungsrasteinrichtung (270) dann, wenn sie nicht in der aktiven Stellung steht, stets in einer Rastbereitschaftsstellung steht.

9. Anhängekupplung nach einem der voranstehenden Ansprüche, **dadurch gekennzeichnet, dass** eine Deaktivierungseinheit (280) vorgesehen ist, mit welcher die Ruhestellungsrasteinrichtung (270) unabhängig von der Schwenkbewegung des Schwenklagerkörpers (14) von der aktiven Stellung in die inaktive Stellung überführbar ist, dass insbesondere die Ruhestellungsrasteinrichtung (270) mittels der Deaktivierungseinheit (280) in Abhängigkeit von einem bestimmten Funktionszustand der Anhängekupplung von der aktiven Stellung in die inaktive Stellung überführbar ist, dass insbesondere die Ruhestellungsrasteinrichtung (270) mittels der Deaktivierungseinheit (280) vor einem Verschwenken des Schwenklagerkörpers (14) von der Ruhestellung (R) in die Arbeitsstellung (A) von der aktiven Stellung in die inaktive Stellung überführbar ist.

10. Anhängekupplung nach einem der voranstehenden Ansprüche, **dadurch gekennzeichnet, dass** die Ruhestellungsrasteinrichtung (270) mittels der Deaktivierungseinheit (280) durch eine mit der Deaktivierungseinheit (280) zusammenwirkende Antriebseinheit (182) von der aktiven Stellung in die inaktive Stellung überführbar ist.

11. Anhängekupplung nach einem der voranstehenden Ansprüche, **dadurch gekennzeichnet, dass** die Ruhestellungsrasteinrichtung (270) einen von einer aktiven Stellung in eine inaktive Stellung bewegbaren Rastkörper (274) umfasst, dass insbesondere der Rastkörper (274) an dem Schwenklagerkörper (14) oder der Schwenklagereinheit (20) angeordnet, in einer Rastrichtung bewegbar ist, und mit einer in der Schwenklagereinheit (20) oder dem Schwenklagerkörper (14) angeordneten Rastaufnahme (282) in der aktiven Stellung in Eingriff bringbar ist, dass insbesondere der in der Rastrichtung bewegbare Rastkörper (274) im Schwenklagerkörper (14) angeordnet ist und dass die Rastaufnahme (282) an der Schwenklagereinheit (20) angeordnet ist, dass insbesondere der Rastaufnahme (282) ein Betätigungskörper (284) der Deaktivierungseinheit (280) zugeordnet ist, der bei wirksamer Deaktivierungseinheit (280) den Rastkörper (274) aus der Rastaufnahme (282) verdrängt.

12. Anhängekupplung nach einem der voranstehenden Ansprüche, **dadurch gekennzeichnet, dass** die Anhängekupplung eine Zustandsauswerteeinheit (350) aufweist, welche mindestens ein Signal der Detektoreinheit (277) auswertet und ein eine gesicherte Ruhestellung anzeigendes Signal (RS) erzeugt.

13. Anhängekupplung nach einem der voranstehenden Ansprüche, **dadurch gekennzeichnet, dass** die Anhängekupplung eine Sicherungseinrichtung (330) aufweist, welche die Drehblockiereinrichtung (50) in der Drehblockierstellung gegen einen Übergang in die Lösestellung sichert, dass insbesondere der Sicherungseinrichtung (330) ein Detektor (344) zugeordnet ist, welcher eine sichernde oder entsichernde Stellung eines die Drehblockierstellung sichernden Sicherungsstifts (294) erfasst, dass insbesondere der Detektor (344) der Sicherungseinrichtung (330) mit der Zustandsauswerteeinheit (350) zusammenwirkt und dass die Zustandsauswerteeinheit (350) ein eine gesicherte Drehblockierstellung der Drehblockiereinrichtung (50) anzeigendes Signal (AS) erzeugt, dass insbesondere die Zustandsauswerteeinheit (350) nur dann das eine gesicherte Ruhestellung (R) anzeigende Signal (RS) erzeugt, wenn die Detektoreinheit (277) die aktive Stellung der Ruhestellungsrasteinrichtung (270) und außerdem der Detektor (344) die entsichernde Stellung der Sicherungseinrichtung (330) meldet, dass insbesondere die Zustandsauswerteeinheit (350) nur dann das eine gesicherte Arbeitsstellung (A) anzeigende Signal (AS) erzeugt, wenn der Detektor (344) die sichernde Stellung der Sicherungseinrichtung (330) und die Detektoreinheit (277) die inaktive Stellung der Ruhestellungsrasteinrichtung (270) meldet.

14. Anhängekupplung nach einem der voranstehenden Ansprüche, **dadurch gekennzeichnet, dass** die Drehblockiereinrichtung (50) mindestens zwei Drehblockierkörper (54) aufweist, die mittels eines Führungskörpers (40) in einer Führungsrichtung (58) bewegbar geführt sind, wobei die Drehblockierkörper (54) in der Arbeitsstellung (A) durch Bewegung in der Führungsrichtung (58) in eine Drehblockierstellung bringbar sind und in dieser mit jeweils einer Aufnahme (60) im Schwenklagerkörper (14) in Eingriff stehen, um eine Schwenkbewegung des Schwenklagerkörpers (14) um die Schwenkachse (22) relativ zum Führungskörper (40) zu blockieren, und in eine Lösestellung bringbar sind und in dieser mit der jeweiligen Aufnahme (60) außer Eingriff stehen, und dass die Drehblockiereinrichtung (50) einen für jeden der Drehblockierkörper (54) jeweils eine quer zur Führungsrichtung (58) verlaufende Druckfläche (66) aufweisenden Betätigungskörper (52) umfasst, durch dessen Bewegung in einer Betätigungsrichtung (72) die mindestens zwei Drehblockierkörper (54) in der Führungsrichtung (58) bewegbar und beaufschlagbar sind, dass insbesondere die Drehblockierkörper (54) um den Betätigungskörper (52) herum angeordnet sind, dass insbesondere der Betätigungskörper (52) um die Schwenkachse (22) drehbar angeordnet ist und insbesondere sich über einen Winkelbereich um die Schwenkachse (22) erstreckende und parallel zur Führungsrichtung (58) variierende Keilflächen (66) aufweist, dass insbesondere die Führungsrichtung (58) mit mindestens einer Komponente in radialer Richtung zur Schwenkachse (22) verläuft, dass insbesondere der Drehblockierkörper (54) durch den sich in radialer Richtung an den Schwenklagerkörper (14) anschließenden Führungskörper (40) geführt ist, dass insbesondere der Führungskörper (40) eine Führungshülse (44) mit der Führungsaufnahme (56) für den jeweiligen Drehblockierkörper (54) aufweist, dass insbesondere der Führungskörper (40) den Betätigungskörper (52) bewegbar führt, dass insbesondere der Führungskörper (40) ein Schwenklager für den Schwenklagerkörper (14) bildet, dass insbesondere der Führungskörper (40) Teil der fahrzeugfest angeordneten Schwenklagereinheit (20) ist, dass insbesondere der Betätigungskörper (52) von dem Führungskörper (40) umschlossen ist und dass insbesondere der Schwenklagerkörper (14) den Führungskörper (40) umgreift.

15. Anhängekupplung nach einem der voranstehenden Ansprüche, **dadurch gekennzeichnet, dass** der Schwenklagerkörper (14) einen die Schwenklagereinheit (20) außenliegend umschließenden Außenkörper bildet, der gegenüber der Schwenklagereinheit (20) in Richtung der Schwenkachse (22) unverschiebbar angeordnet ist, und dass insbesondere das erste Ende des Kugelhalses (10) an dem Außenkörper (14) angesetzt ist.

16. Anhängekupplung nach einem der voranstehenden Ansprüche, **dadurch gekennzeichnet, dass** der Schwenklagerkörper (14) einen einen Teilbereich der Drehblockiereinrichtung (50) außenliegend umschließenden Außenkörper bildet, der gegenüber dem Führungskörper (40) in Richtung der Schwenkachse (22) unverschiebbar angeordnet ist.
